# EUROPEAN PATENT SPECIFICATION

(11) **EP 3 448 561 B1**
(45) Date of publication and mention of the grant of the patent: **02.06.2021**
(21) Application number: 17721447.5
(22) Date of filing: 28.04.2017
(51) Int. Cl.: B01J 37/18, B01J 37/02, B01J 27/188, B01J 27/19, C10G 3/00, C10L 1/04

(54) **CATALYST, ITS PREPARATION AND USE IN THE CONVERSION OF OXYGEN-CONTAINING COMPOUNDS**
KATALYSATOR, DESSEN HERSTELLUNG UND VERWENDUNG BEI DER UMWANDLUNG VON SAUERSTOFFHALTIGEN VERBINDUNGEN
CATALYSEUR, SA PRÉPARATION ET SON UTILISATION DANS LA CONVERSION DE COMPOSÉS CONTENANT DE L'OXYGÈNE

(30) Priority: 29.04.2016 GB 201607609
(43) Date of publication of application: 06.03.2019
(73) Proprietor: SCG Chemicals Co., Ltd., Bangkok 10800 (TH); SCG Packaging Public Company Limited, Bangkok 10800 (TH)
(72) Inventor: O'HARE, Dermot, Oxford OX1 3TA (GB); BUFFET, Jean-Charles, Oxford OX1 3TA (GB); TSANG, Shik Chi Edman, Oxford OX1 3TA (GB); DUAN, Haohong, Oxford OX1 3TA (GB); ISSARIYAKUL, Titipong, Sapansung Bangkok 10250 (TH); TREERATDILOKKUL, Apirak, Muang Nonthaburi 11000 (TH); LERTRATTANAJINDA, Rungthip, Bangkhuntien Bangkok 10150 (TH); LERKMANGKORN, Wuttinan, Banna Nakhon Nayok 26110 (TH); VORAKUNPINIJ, Adisak, Muang Nonthaburi 11000 (TH); PONGTANYA, Pongsuda, Bangkok Noi Bangkok 10700 (TH)
(74) Representative: HGF
(86) International application number: PCT/GB2017/051195
(87) International publication number: WO 2017/187187

(56) References cited:
- EP-A1- 2 338 867
- EP-A2- 2 823 886
- CHEN JIXIANG ET AL: "Regulating product distribution in deoxygenation of methyl laurate on silica-supported Ni-Mo phosphides: Effect of Ni/Mo ratio", FUEL, vol. 129, 4 April 2014 (2014-04-04), pages 1-10, XP028654210, ISSN: 0016-2361, DOI: 10.1016/J.FUEL.2014.03.049 & Jixiang Chen ET AL: "Supplementary information for: Regulating product distribution in deoxygenation of methyl laurate on silica-supported Ni-Mo phosphides: Effect of Ni/Mo ratio", , 4 April 2014 (2014-04-04), XP055392416, Retrieved from the Internet: URL:http://ars.els-cdn.com/content/image/1 -s2.0-S0016236114002993-mmc1.doc [retrieved on 2017-07-20]
- CHEN WEIMIN ET AL: "A comparative study of tungsten-modified PtRu electrocatalysts for methanol oxidation", INTERNATIONAL JOURNAL OF HYDROGEN ENERGY, vol. 39, no. 13, 24 March 2014 (2014-03-24), pages 6995-7003, XP028843365, ISSN: 0360-3199, DOI: 10.1016/J.IJHYDENE.2014.02.147
- ZHAO H Y ET AL: "Hydrodeoxygenation of guaiacol as model compound for pyrolysis oil on transition metal phosphide hydroprocessing catalysts", APPLIED CATALYSIS A: GENERAL, ELSEVIER, AMSTERDAM, NL, vol. 391, no. 1, 21 July 2010 (2010-07-21) , pages 305-310, XP028360582, ISSN: 0926-860X, DOI: 10.1016/J.APCATA.2010.07.039 [retrieved on 2010-07-30] cited in the application

## Description

### INTRODUCTION

The present invention relates to a process for the preparation of a catalytic compound, the catalytic compound obtainable by the process and being suitable for reducing the oxygen content of an oxygen-containing compound, and the uses of such a catalytic compound in a process for reducing the oxygen content of an oxygen-containing compound. More particularly, the present invention relates to a process of preparing a catalytic compound that is suitable for performing hydrodeoxygenation (HDO) of bio-oil, as well as to the uses of such a catalytic compound in converting bio-oil to alkanes by a process of HDO.

### BACKGROUND OF THE INVENTION

Environmental concerns and the increasing cost of fossil fuel have stimulated worldwide interest in alternatives to petroleum-based fuels, chemicals, and other products. Biomass, i.e. material derived from living or recently living biological material, is one category of renewable alternatives to such fuels and chemicals. Fuels from biomass, including from vegetable, animal, or algae sources, will become increasingly important. A key challenge for promoting and sustaining the use of biomass in industry is the need to develop efficient technologies for converting biomass into useful products, e.g. hydrocarbon fuels. In particular, efficient technologies are needed for upgrading bio-oil into hydrocarbons by reducing the oxygen and water contents of the bio-oil.

Cost-effective cleavage of carbon-oxygen bonds plays an important role and remains a great challenge in the production of hydrocarbon fuels and fine chemicals from biomass. With the increasing demand for fuel and commodity chemicals and our dependence on non-renewable resources like petroleum, there is a need to develop increasingly efficient strategies to produce hydrocarbons and commodity chemicals from renewable and terrestrially abundant sources such as oxygen-rich biopolymers (e.g. biomass) and biomass-derived bio-oils.

However, many current heterogeneous hydrodeoxygenation (HDO) catalysts are susceptible to deactivation in the presence of bio-oil substrates, ultimately affording complicated mixtures of products at low conversion. Such conventional catalysts include NiMo and CoMo sulphites, which are problematic due to sulfur contamination and coke accumulation (Baker, E. G.; Elliott, D. C., Method of upgrading oils containing hydroxyaromatic hydrocarbon compounds to highly aromatic gasoline; Etienne Laurent, B. D. journal of Catalysis 1994, 146, 281). Recently, metal phosphides have been reported to be promising alternative due to their activity and stability advantages (Zhao, H. Y.; Li, D.; Bui, P.; Oyama, S. T. Applied Catalysis A: General 2011, 391, 305). However, there is still room for performance improvement in metal-phosphide-catalyzed HDO.

J. Chen et al. / Fuel 129 (2014) 1-10 investigates SiO₂-supported Ni₂P, MoP and Ni-Mo bimetallic phosphides with different Ni/Mo ratios for the deoxygenation of methyl laurate to C11 and C12 hydrocarbons.

EP2338867 describes a method of preparing ethylene glycol from cellulose using cellulose as the feed for the reaction.

W. Chen et al. International Journal of hydrogen energy 39 (2014) 6995-7003 describes the synthesis of a tungsten oxide-modified PtRu catalyst and a phosphotungstic acid-modified PtRu catalyst, and examines their catalytic performance in methanol oxidation.

EP2823886 describes hydroprocessing catalysts supported on a foraminous carrier and methods for preparing such catalysts using stabilized aqueous compositions.

H. Y. Zhao et al. / Applied Catalysis A: General 391 (2011) 305-310 describes the hydrodeoxygenation of guaiacol as a model compound for pyrolysis oil on transition metal phosphide hydroprocessing catalysts.

There is therefore a need for increasingly efficient HDO catalyst systems for the production of hydrocarbons from biomass in the presence of hydrogen. Catalysts are also needed which are much less susceptible to poisoning and deactivation when in contact with the biomass substrate.

The present invention was devised with the foregoing in mind.

### SUMMARY OF THE INVENTION

According to one aspect of the present invention there is provided a process for the preparation of a catalytic compound, the catalytic compound being suitable for reducing the oxygen content of an oxygen-containing compound, the process comprising the steps of:
a) providing a dry mixture by:
   a1) mixing:
      i. a source of at least one noble metal, wherein the source of at least one noble metal is a source of Pd,
      ii. a source of molybdenum and/or tungsten,
      iii. a Brønsted acid, wherein the Brønsted acid is selected from HCI, H₂SO₄ and HNO₃,
      iv. a carboxylic acid or a polycarboxylic acid, wherein the carboxylic acid or polycarboxylic acid is selected from citric acid, hydroxymethanetricarboxylic acid, (1R,2S)-1-hydroxy-1,2,5-pentanetricarboxylic acid, and 3-(carboxymethyl)-3-hydroxyhexanedioic acid,
      v. a source of heteroatom selected from phosphorus, arsenic and silicon, wherein the source of heteroatom selected from phosphorus, arsenic and silicon is selected from (NH₄)₂HPO₄, (NH₄)H₂PO₄ and H₃PO₄, and
      vi. water;
   a2) contacting the mixture of step a1) with an inorganic support, with mixing, wherein the inorganic support is selected from SiO₂, Al₂O₃, SiO₂-Al₂O₃, ZrO₂, TiO₂ and zeolites; and
   a3) drying the mixture resulting from step a2);
   or
   a'1) mixing:
      i. a source of molybdenum and/or tungsten,
      ii. a carboxylic acid or a polycarboxylic acid, wherein the carboxylic acid or polycarboxylic acid is selected from citric acid, hydroxymethanetricarboxylic acid, (1R,2S)-1-hydroxy-1,2,5-pentanetricarboxylic acid, and 3-(carboxymethyl)-3-hydroxyhexanedioic acid,
      iii. a source of heteroatom selected from phosphorus, arsenic and silicon, wherein the source of heteroatom selected from phosphorus, arsenic and silicon is selected from (NH₄)₂HPO₄, (NH₄)H₂PO₄ and H₃PO₄, and
      iv. water;
   a'2) contacting the mixture of step a'1) with an inorganic support, with mixing, wherein the inorganic support is selected from SiO₂, Al₂O₃, SiO₂-Al₂O₃, ZrO₂, TiO₂ and zeolites;
   a'3) drying the mixture resulting from step a'2);
   a'4) thermally treating the dried mixture resulting from step a'3) at a temperature of 300-800°C;
   a'5) contacting the thermally-treated mixture of step a'4) with an aqueous solution of a Brønsted acid and a source of at least one noble metal, with mixing, wherein the Brønsted acid is selected from HCI, H₂SO₄ and HNO₃ and the source of at least one noble metal is a source of Pd; and
   a'6) drying the mixture resulting from step a'5);
b) thermally treating the mixture of step a) at a temperature of 300-800°C to yield a thermally-treated product;
c) contacting the thermally-treated product of step b) with hydrogen;
wherein step c) is conducted at a temperature no higher than 100°C for its duration.

According to another aspect of the present invention there is provided a catalytic compound obtainable, obtained or directly obtained by a process defined herein.

Also described herein is a catalytic compound suitable for reducing the oxygen content of an oxygen-containing compound, the catalytic compound comprising:
a) an inorganic support, and
b) a catalytically active component supported on the inorganic support;
wherein the catalytically active component comprises:
i. an oxide-phosphate of a metal (M), the metal (M) being selected from at least one of molybdenum and tungsten, and being present in more than one oxidation state, and
ii. at least one noble metal dispersed throughout the catalytically active component.

According to another aspect of the present invention there is provided a use of a catalytic compound defined herein for reducing the oxygen content of an oxygen-containing compound, wherein the oxygen-containing compound is a mixture of oxygen-containing compounds in the form of a biomass or a bio-oil.

According to another aspect of the present invention there is provided a process for reducing the oxygen content of an oxygen-containing compound, the process comprising the steps of:
a) providing a mixture of:
   i. the oxygen-containing compound,
   ii. a catalytic compound as defined herein, and optionally
   iii. a suitable solvent; and
b) heating the mixture of step a) to a temperature of 150-350°C,
wherein step b) is performed under H₂.

### DETAILED DESCRIPTION OF THE INVENTION

### Preparation of catalytic compounds

As described hereinbefore, the present invention provides a process for the preparation of a catalytic compound, the catalytic compound being suitable for reducing the oxygen content of an oxygen-containing compound, the process comprising the steps of:
a) providing a dry mixture by:
   a1) mixing:
      i. a source of at least one noble metal, wherein the source of at least one noble metal is a source of Pd,
      ii. a source of molybdenum and/or tungsten,
      iii. a Brønsted acid, wherein the Brønsted acid is selected from HCI, H₂SO₄ and HNO₃,
      iv. a carboxylic acid or a polycarboxylic acid, wherein the carboxylic acid or polycarboxylic acid is selected from citric acid, hydroxymethanetricarboxylic acid, (1R,2S)-1-hydroxy-1,2,5-pentanetricarboxylic acid, and 3-(carboxymethyl)-3-hydroxyhexanedioic acid,
      v. a source of heteroatom selected from phosphorus, arsenic and silicon, wherein the source of heteroatom selected from phosphorus, arsenic and silicon is selected from (NH₄)₂HPO₄, (NH₄)H₂PO₄ and H₃PO₄, and
      vi. water;
   a2) contacting the mixture of step a1) with an inorganic support, with mixing, wherein the inorganic support is selected from SiO₂, Al₂O₃, SiO₂-Al₂O₃, ZrO₂, TiO₂ and zeolites; and
   a3) drying the mixture resulting from step a2);
   or
   a'1) mixing:
      i. a source of molybdenum and/or tungsten,
      ii. a carboxylic acid or a polycarboxylic acid, wherein the carboxylic acid or polycarboxylic acid is selected from citric acid, hydroxymethanetricarboxylic acid, (1*R*,2*S*)-1-hydroxy-1,2,5-pentanetricarboxylic acid, and 3-(carboxymethyl)-3-hydroxyhexanedioic acid,
      iii. a source of heteroatom selected from phosphorus, arsenic and silicon, wherein the source of heteroatom selected from phosphorus, arsenic and silicon is selected from (NH₄)₂HPO₄, (NH₄)H₂PO₄ and H₃PO₄, and
      iv. water;
   a'2) contacting the mixture of step a'1) with an inorganic support, with mixing, wherein the inorganic support is selected from SiO₂, Al₂O₃, SiO₂-Al₂O₃, ZrO₂, TiO₂ and zeolites;
   a'3) drying the mixture resulting from step a'2);
   a'4) thermally treating the dried mixture resulting from step a'3) at a temperature of 300-800°C;
   a'5) contacting the thermally-treated mixture of step a'4) with an aqueous solution of a Brønsted acid and a source of at least one noble metal, with mixing, wherein the Brønsted acid is selected from HCI, H₂SO₄ and HNO₃ and the source of at least one noble metal is a source of Pd; and
   a'6) drying the mixture resulting from step a'5);
b) thermally treating the mixture of step a) at a temperature of 300-800°C to yield a thermally-treated product;
c) contacting the thermally-treated product of step b) with hydrogen;
wherein step c) is conducted at a temperature no higher than 100°C for its duration.

The inventors have surprisingly found that the above-described process results in the formation of catalytic compounds that exhibit remarkable activity and selectivity in catalysing the HDO of oxygen-containing organic compounds. HDO, depicted generally in scheme 1 below, is regarded as a cascade reaction, involving multiple primary steps. In the example of phenol, the process begins with the semi-hydrogenation of the benzene ring, followed by deoxygenation of the hydroxyl group, and eventually hydrogenation of the resulting cyclohexene.

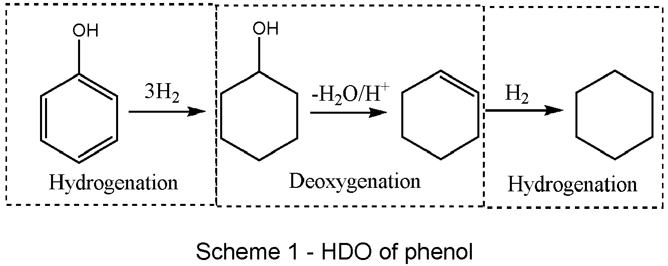

The catalytic compounds obtainable by the above-described process are particularly apt at performing HDO on bio-oils. The precursor to bio-oil, biomass, is composed principally of a complex class of organic polymers, known as lignin, which can be depolymerised by fast pyrolysis to yield a mixture of simple, oxygen-containing aromatic and partially-aromatic compounds (including carboxylic acids, furans and phenols), known as bio-oil. When compared with commercially available palladium catalysts (Pd/Al₂O₃), the catalytic compounds obtainable by the above-described process demonstrate excellent activity in catalysing the HDO of the oxygen-containing aromatic compounds of bio-oil, with a remarkable tendency to yield HDO products that contain no oxygen whatever, particularly cyclohexane. The catalytic compounds also demonstrated outstanding stability when used in fixed bed reactions.

The present invention therefore encompasses a process for the preparation of a catalytic compound, the catalytic compound being suitable for catalysing the hydrodeoxygenation of an oxygen-containing compound (e.g. a bio-oil).

In spite of the relatively facile preparation route, the structure and composition of the catalytic compounds themselves is understood to be notably more complex. In essence, the catalytic compound is bifunctional, containing a noble metal apt for catalysing the hydrogenation reaction, and a component with an acidic site that catalyses the deoxygenation process. The catalytic compounds also contain a component based on a reduced heteropolymetallate (e.g. a reduced heterpolymolybdate) containing polyoxymetallates (POMs) based on Mo(V)/Mo(VI) or W(V)/W(VI), and a heteroatom, namely phosphorus. Reduced heteropolymetallates have been extensively studied for many years and are currently mainly used as acid and oxidative catalysts due to their strong Brønsted acidities and oxidation potentials. It has now been found that materials of this type lend themselves to promoting the deoxygenation process within HDO catalytic compounds. In particular, it has been discovered that the acidity and reactivity of heteropolymetallate-type compounds can be controlled by varying the framework atoms (e.g. Mo atoms) or the central atoms (e.g. P atoms) and the nature of the charge balancing cations.

The process of the invention is implemented by a "one-step" or a "two-step" route. In the "one-step" route, the dry mixture of step a) is prepared by:
a1) mixing:
   i. a source of at least one noble metal, wherein the source of at least one noble metal is a source of Pd,
   ii. a source of molybdenum and/or tungsten,
   iii. a Brønsted acid, wherein the Brønsted acid is selected from HCI, H₂SO₄ and HNO₃,
   iv. a carboxylic acid or a polycarboxylic acid, wherein the carboxylic acid or polycarboxylic acid is selected from citric acid, hydroxymethanetricarboxylic acid, (1R,2S)-1-hydroxy-1,2,5-pentanetricarboxylic acid, and 3-(carboxymethyl)-3-hydroxyhexanedioic acid,
   v. a source of heteroatom selected from phosphorus, arsenic and silicon, wherein the source of heteroatom selected from phosphorus, arsenic and silicon is selected from (NH₄)₂HPO₄, (NH₄)H₂PO₄ and H₃PO₄, and
   vi. water;
a2) contacting the mixture of step a1) with an inorganic support, with mixing, wherein the inorganic support is selected from SiO₂, Al₂O₃, SiO₂-Al₂O₃, ZrO₂, TiO₂ and zeolites; and
a3) drying the mixture resulting from step a2).

In the "two-step" route, the dry mixture of step a) is prepared by:
a'1) mixing:
   i. a source of molybdenum and/or tungsten,
   ii. a carboxylic acid or a polycarboxylic acid, wherein the carboxylic acid or polycarboxylic acid is selected from citric acid, hydroxymethanetricarboxylic acid, (1R,2S)-1-hydroxy-1,2,5-pentanetricarboxylic acid, and 3-(carboxymethyl)-3-hydroxyhexanedioic acid,
   iii. a source of heteroatom selected from phosphorus, arsenic and silicon, wherein the source of heteroatom selected from phosphorus, arsenic and silicon is selected from (NH₄)₂HPO₄, (NH₄)H₂PO₄ and H₃PO₄, and
   iv. water;
a'2) contacting the mixture of step a'1) with an inorganic support, with mixing, wherein the inorganic support is selected from SiO₂, Al₂O₃, SiO₂-Al₂O₃, ZrO₂, TiO₂ and zeolites;
a'3) drying the mixture resulting from step a'2);
a'4) thermally treating the dried mixture resulting from step a'3) at a temperature of 300-800°C;
a'5) contacting the thermally-treated mixture of step a'4) with an aqueous solution of a Brønsted acid and a source of at least one noble metal, with mixing, wherein the Brønsted acid is selected from HCI, H₂SO₄ and HNO₃ and the source of at least one noble metal is a source of Pd; and
a'6) drying the mixture resulting from step a'5).

Suitably, the process is implemented according to the "two-step" route.

In an embodiment, the mole ratio of the molybdenum and/or tungsten (present within the source of molybdenum and/or tungsten) to the heteroatom (present within the source of heteroatom) mixed in step a) is 1: (0.5-1.5). Hence, the respective quantities of the source of molybdenum and/or tungsten and the source of heteroatom that are mixed in step a) are such that the mole ratio of atomic molybdenum and/or tungsten to atomic heteroatom is 1: (0.5-1.5). It will be understood that where the source of molybdenum and/or tungsten is provided as a mixture of molybdenum-containing species and tungsten-containing species, the ratio of the sum of the number of moles of atomic molybdenum and the number of moles of atomic tungsten to the number of moles of heteroatom is 1: (0.5-1.5).

Suitably, the mole ratio of the molybdenum and/or tungsten present within the source of molybdenum and/or tungsten to the heteroatom present within the source of heteroatom mixed in step a) is 1: (0.75-1.25). More suitably, the mole ratio of the molybdenum and/or tungsten present within the source of molybdenum and/or tungsten to the heteroatom present within the source of heteroatom mixed in step a) is 1: (0.8-1.2). Most suitably, the mole ratio of the molybdenum and/or tungsten present within the source of molybdenum and/or tungsten to the heteroatom present within the source of heteroatom mixed in step a) is 1: (0.9-1.1). In a particular embodiment, in the mixture of step a) the atomic molybdenum and/or tungsten and atomic heteroatom are substantially equimolar.

In another embodiment, the carboxylic acid or polycarboxylic acid mixed in step a) is present in an excess with respect to the number of moles of molybdenum and/or tungsten present within the source of molybdenum and/or tungsten and the number of moles of heteroatom present within the source of heteroatom.

In another embodiment, in mixing step a), the mole ratio of the noble metal (within the source of at least one noble metal) to the heteroatom (within the source of heteroatom) is (30-90):1. Suitably, in mixing step a), the mole ratio of the noble metal to the heteroatom is (40-80):1. More suitably, in mixing step a), the mole ratio of the noble metal to the heteroatom is (50-70):1. Without wishing to be bound by theory, it is believed that the relative quantity of noble metal has an effect on the size of the noble metal nanoparticles in the finished catalytic compound.

Any suitable quantity of Brønsted acid may be used, providing it is sufficient to dissolve the source of noble metal. In an embodiment, in mixing step a) the mole ratio of Brønsted acid to heteroatom (within the source of heteroatom) is ≥2.5:1. Suitably, in mixing step a) the mole ratio of Brønsted acid to heteroatom (within the source of heteroatom) is ≥3:1.

The carboxylic acid or polycarboxylic acid is selected from citric acid, hydroxymethanetricarboxylic acid, (1R,2S)-1-hydroxy-1,2,5-pentanetricarboxylic acid, and 3-(carboxymethyl)-3-hydroxyhexanedioic acid. Suitably, the carboxylic acid or polycarboxylic acid is citric acid.

The Brønsted acid is selected from HCI, H₂SO₄ and HNO₃. Suitably, the Brønsted acid is HCI.

The source of at least one noble metal is a source of Pd. More suitably, the source of at least one noble metal is selected from PdCl₂, Pd(NO₃)₂ and Na₂PdCl₄. In a particularly suitable embodiment, the source of at least one noble metal is PdCl₂.

When the present process is implemented according to the "one-step" route, the source of at least one noble metal (e.g. PdCl₂) may be dissolved in the Brønsted acid prior to being mixed with the other component specified in step a).

In another embodiment, the source of molybdenum and/or tungsten is a source of molybdenum. Suitably, the source of molybdenum and/or tungsten is i) a molybdenum salt in the form [Mo₇O₂₄]⁶⁻, or ii) Na₂MoO₄. More suitably, the source of molybdenum and/or tungsten is selected from (NH₄)₆Mo₇O₂₄ and K₆Mo₇O₂₄. In a particularly suitable embodiment, the source of molybdenum and/or tungsten is (NH₄)₆Mo₇O₂₄.

The source of heteroatom selected from phosphorus, arsenic and silicon is selected from (NH₄)₂HPO₄, (NH₄)H₂PO₄ and H₃PO₄. More suitably, the source of heteroatom selected from phosphorus, arsenic and silicon is (NH₄)₂HPO₄.

The inorganic support is selected from SiO₂, Al₂O₃, SiO₂-Al₂O₃, ZrO₂,TiO₂ and a zeolite. Suitably, the inorganic support is SiO₂.

In an embodiment, step b) comprises thermally treating the mixture of step a) at a temperature of 300-600°C. Suitably, step b) comprises thermally treating the mixture of step a) at a temperature of 450-550°C. Alternatively, step b) comprises thermally treating the mixture of step a) at a temperature of 375-525°C.

In another embodiment, step c) is conducted at a temperature no higher than 60°C for its duration. Hence, when step c) involves contacting the thermally-treated product of step b) with hydrogen at a temperature no higher than 60°C for 24 hours, the temperature does not rise above 60°C for the entire duration of the 24 hours that the thermally-treated product of step b) is being contacted with hydrogen. Step c) may therefore be conducted at a temperature of 10-60°C or 15-60°C or 18-60°C for its duration.

Suitably, step c) is conducted at a temperature no higher than 40°C for its duration. Step c) may therefore be conducted at a temperature of 10-40°C or 15-40°C or 18-40°C for its duration.

More suitably, step c) is conducted at a temperature no higher than 30°C for its duration. Step c) may therefore be conducted at a temperature of 10-30°C or 15-30°C or 18-30°C for its duration.

In a particularly suitable embodiment, step c) is conducted at a temperature no higher than 26°C for its duration (e.g at a temperature ranging from 18-26°C).

In an embodiment, step c) is conducted for 0.1 - 72 hours. Suitably, step c) is conducted for 1 - 72 hours. More suitably, step c) is conducted for 12 - 48 hours. Even more suitably, step c) is conducted for 18 - 36 hours. Most suitably, step c) is conducted for 20 - 30 hours. In a particularly preferred embodiment, step c) is conducted for a period of time sufficient for the thermally-treated product of step b) to exhibit a visible colour change to a colour commonly known as "molybdenum blue".

In another embodiment, step c) comprises contacting the thermally-treated product of step b) with hydrogen flowing at 40-120 cm³/min. Suitably, step c) comprises contacting the thermally-treated product of step b) with hydrogen flowing at 60-100 cm³/min.

In another embodiment, drying steps a3) ("one-step" route), a'3) ("two-step" route) and a'6) ("two-step" route) are each independently conducted at a temperature of 80-200°C. Suitably, drying steps a3), a'3) and a'6) are each independently conducted at a temperature of 100-150°C. More suitably, drying steps a3), a'3) and a'6) are each independently conducted at a temperature of 110-130°C. Steps a3), a'3) and a'6) may be performed for any period of time suitable to yield a dry sample.

In another embodiment, when the process is implemented according to the "two-step" route, step a'4) comprises thermally treating the dried mixture resulting from step a'3) at a temperature of 300-600°C. Suitably, step a'4) comprises thermally treating the dried mixture resulting from step a'3) at a temperature of 450-550°C. Alternatively, step a'4) comprises thermally treating the dried mixture resulting from step a'3) at a temperature of 375-525°C.

In another embodiment, the process further comprises a step d) of contacting the hydrogen-treated product of step c) with a substance suitable to stabilise it and/or prevent its degradation. Suitably, the process further comprises a step d) of contacting the hydrogen-treated product of step c) with an inert gas (e.g. N₂).

The oxygen-containing compound may have any of the definitions recited herein.

### Catalytic compounds

As described hereinbefore, the present invention also provides a catalytic compound obtainable, obtained or directly obtained by the process defined in claims 1 to 11. Suitably, the catalytic compound obtainable, obtained or directly obtained by the process defined in claims 1 to 11 is suitable for reducing the oxygen content of an oxygen-containing compound, and comprises:
a) an inorganic support, and
b) a catalytically active component supported on the inorganic support;
wherein the catalytically active component comprises:
i. an oxide-phosphate of a metal (M), the metal (M) being selected from at least one of molybdenum and tungsten, and being present in more than one oxidation state, and
ii. at least one noble metal dispersed throughout the catalytically active component.

The inventors have surprisingly found that the catalytic compounds obtainable by the process of the invention, which are provided in solid form, exhibit remarkable activity and selectivity in catalysing the HDO of oxygen-containing organic compounds. The catalytic compounds obtainable by the process of the invention are particularly apt at performing HDO on bio-oils. When compared with commercially available palladium catalysts (Pd/Al₂O₃), the catalytic compounds obtainable by the process of the invention demonstrate excellent activity in catalysing the HDO of the oxygen-containing aromatic compounds of bio-oil, with a remarkable tendency to yield HDO products that contain no oxygen whatever, particularly cyclohexane. The catalytic compounds also demonstrate outstanding stability when used in fixed bed reactions.

In an embodiment, the catalytically active component is provided as a plurality of nanoparticles supported on the inorganic support. The bulk structure of the catalytically active component may be described as a metal oxide-phosphate (the metal being molybdenum and/or tungsten). The nanoparticles may be crystallographically disordered. Suitably, M and P are well dispersed throughout the nanoparticles.

In an embodiment, the nanoparticles of the catalytically active component have a particle size of 0.5-20 nm. Suitably, the nanoparticles have a particle size of 0.5-10 nm. More suitably, the nanoparticles have a particle size of 1-7.5 nm. Most suitably, the nanoparticles have a particle size of 1-5 nm. Suitably, the nanoparticles of the catalytically active component are not crystalline.

In an embodiment, M is tungsten.

In an embodiment, M is molybdenum and tungsten.

In a particularly suitable embodiment, M is molybdenum.

In an embodiment, M is present in oxidation states M⁵⁺ and M⁶⁺. In such embodiments, the average oxidation state for M lies between M⁵⁺ and M⁶⁺.

In an embodiment, the metal oxide-phosphate comprises MO₆ octahedra and/or PO₄ tetrahedra. Suitably, at least a portion of the MO₆ octahedra and PO₄ tetrahedra are linked via a bond -M-O-P-. In such embodiments, the linking O atoms are therefore shared between a given MO₆ octahedron and an adjacent PO₄ tetrahedron.

In an embodiment, the ³¹P solid state NMR spectrum of the catalytic compound exhibits a resonance in the region -100 to 100 ppm. Suitably, the ³¹P solid state NMR spectrum of the catalytic compound exhibits a resonance in the region -50 to 50 ppm. A signal at this chemical shift closely matches that of a MoO₃-P₂O₅ glass with a Mo:P molar ratio of approximately 1.

In an embodiment, the Raman spectrum of the catalytic compound exhibits a signal in the region 800 to 1200 cm⁻¹. Suitably, the Raman spectrum of the catalytic compound exhibits a signal in the region 900 to 1000 cm⁻¹. A strong absorption band in this region can be assigned to a terminal v(Mo=O) in a MoO₆ octahedron.

In an embodiment, the catalytically active component contains vacant sites on M (e.g. Mo). For example, certain MO₆ octahedra may actually contain only 5 oxygen atoms. It is believed that such vacant sites on M facilitate binding of the substrate.

In an embodiment, at least a portion of the catalytically active component has a glassy structure. Suitably, at least a portion of the catalytically active component has a structure resembling that of MoO₃-P₂O₅ glass (e.g. with a Mo:P molar ratio ranging from 0.75:1 to 1.25:1).

In an embodiment, the molar ratio of M to phosphorus within the catalytically active component range from 0.75:1 to 1.25:1. Suitably, the molar ratio of M to phosphorus within the catalytically active component range from 0.85:1 to 1.05:1. More suitably, the molar ratio of M to phosphorus within the catalytically active component range from 0.85:1 to 1:1.

In an embodiment, the molar ratio of the noble metal (namely Pd) to M within the catalytically active component range from 0.04:1 to 0.15:1. Suitably, the molar ratio of the noble metal (namely Pd) to M within the catalytically active component range from 0.055:1 to 0.09:1.

The at least one noble metal is Pd.

In a particularly suitable embodiment, the at least one noble metal (namely Pd) is highly dispersed throughout the nanoparticles of the catalytically active component. Suitably, at least a portion of the at least one noble metal is atomically dispersed throughout the nanoparticles of the catalytically active component. Analysis of the catalytic compound reveals that the noble metal (namely Pd) is present in multiple environments, indicating it is atomically dispersed throughout the catalytically active component.

In an embodiment, at least a portion of the noble metal is provided in a square planar configuration (surrounded by four oxygen atoms) and/or in a distorted octahedral configuration (surrounded by six oxygen atoms). Suitably, the noble metal-containing configurations are linked to the MO₆ octahedra and/or PO₄ tetrahedra via O atom sharing.

In an embodiment, the average oxidation state of the at least one noble metal is between 2+ and 3+.

In an embodiment, the catalytic compound comprises 0.08 to 2 wt% of the at least one noble metal (namely Pd). Suitably, the catalytic compound comprises 0.1 to 1.5 wt% of the at least one noble metal (namely Pd). More suitably, the catalytic compound comprises 0.2 to 1 wt% of the at least one noble metal (namely Pd). Yet more suitably, the catalytic compound comprises 0.2 to 0.8 wt% of the at least one noble metal (namely Pd). Even more suitably, the catalytic compound comprises 0.3 to 0.7 wt% of the at least one noble metal (namely Pd). Most suitably, the catalytic compound comprises 0.35 to 0.6 wt% of the at least one noble metal (namely Pd).

In an embodiment, the catalytic compound comprises 0.5 to 5 wt% of phosphorus. Suitably, the catalytic compound comprises 1 to 4 wt% of phosphorus. Most suitably, the catalytic compound comprises 1.5 to 3 wt% of phosphorus.

In an embodiment, the catalytic compound comprises 3 to 12 wt% of M (e.g. molybdenum). Suitably, the catalytic compound comprises 4 to 10 wt% of M (e.g. molybdenum). Most suitably, the catalytic compound comprises 6.5 to 8.5 wt% of M (e.g. molybdenum).

In an embodiment, the catalytic compound comprises 30 to 60 wt% of oxygen. Suitably, the catalytic compound comprises 35 to 55 wt% of oxygen. More suitably, the catalytic compound comprises 40 to 50 wt% of oxygen.

In an embodiment, the catalytic compound comprises 30 to 60 wt% of silicon. Suitably, the catalytic compound comprises 35 to 55 wt% of silicon. More suitably, the catalytic compound comprises 40 to 50 wt% of silicon.

In a particularly suitable embodiment, the catalytic compound comprises 0.1 to 1.5 wt% of the at least one noble metal (namely Pd), 0.5 to 5 wt% of phosphorus, 3 to 12 wt% of M (e.g. molybdenum), optionally 30 to 60 wt% of oxygen and optionally 30 to 60 wt% of silicon. Suitably, the catalytic compound comprises 0.2 to 0.8 wt% of the at least one noble metal (namely Pd), 1 to 4 wt% of phosphorus, 4 to 10 wt% of M (e.g. molybdenum), optionally 35 to 55 wt% of oxygen and optionally 35 to 55 wt% of silicon. Most suitably, the catalytic compound comprises 0.35 to 0.6 wt% of the at least one noble metal (namely Pd), 1.5 to 3 wt% of phosphorus, 6.5 to 8.5 wt% of M (e.g. molybdenum), optionally 40 to 50 wt% of oxygen and optionally 40 to 50 wt% of silicon.

In an embodiment, the catalytic compound exhibits Lewis acidity, and optionally also Brønsted acidity. Suitably, the catalytic compound has a Brønsted acid density of 0.008 to 0.02 mmol/m² and/or a Lewis acid density of 0.004 to 0.01 mmol/m² determined by solid state ³¹P MAS NMR using TMPO (trimethylphosphine oxide) as the probe molecule. More suitably, the catalytic compound has a Brønsted acid density of 0.01 to 0.017 mmol/m² and/or a Lewis acid density of 0.005 to 0.009 mmol/m² determined by solid state ³¹P MAS NMR using TMPO (trimethylphosphine oxide) as the probe molecule. Yet more suitably, the catalytic compound has a Brønsted acid density of 0.011 to 0.015 mmol/m² and/or a Lewis acid density of 0.006 to 0.0085 mmol/m² determined by solid state ³¹P MAS NMR using TMPO (trimethylphosphine oxide) as the probe molecule.

In an embodiment, the inorganic support is SiO₂. Suitably, the inorganic support is provided as an amorphous silica gel.

In an embodiment, the catalytic compound is substantially amorphous. The term substantially amorphous will be understood by one of ordinary skill in the art to mean that the compound exhibits no Bragg diffraction except for a broad feature due to an amorphous support (e.g. SiO₂).

In an embodiment, the catalytic compound is provided in particulate form (e.g. a powder).

As discussed hereinbefore in relation to the processes of the invention, the catalytic compounds of the invention are provided in a reduced form. The blue/green colour of the catalytic compounds may be described as molybdenum blue.

The oxygen-containing compound may have any of the definitions recited herein.

### Applications of catalytic compounds

As discussed hereinbefore, the present invention also provides a use of a catalytic compound defined herein for reducing the oxygen content of an oxygen-containing compound, wherein the oxygen-containing compound is a mixture of oxygen-containing compounds in the form of a biomass or a bio-oil..

As discussed hereinbefore, the present invention also provides a process for reducing the oxygen content of an oxygen-containing compound, the process comprising the steps of:
a) providing a mixture of:
   i. the oxygen-containing compound,
   ii. a catalytic compound obtainable by the process of the present invention, and optionally
   iii. a suitable solvent; and
b) heating the mixture of step a) to a temperature of 150-350°C,
wherein step b) is performed under H₂.

The present invention therefore encompasses the use of a catalytic compound obtainable by the process of the present invention for performing HDO of an oxygen-containing compound, and a process for performing HDO of an oxygen-containing compound.

In an embodiment, the suitable solvent is present.

In an embodiment, the oxygen-containing compound has a structure according to formula (I) shown below: 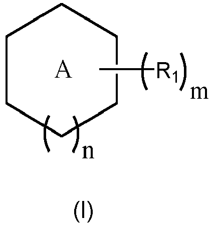 wherein
ring A is saturated or unsaturated (containing one or more carbon-carbon double bonds), optionally containing 1 or 2 oxygen atoms within the ring;
n is an integer selected from 0 and 1;
each R₁ is independently selected from (1-6C)alkyl, (2-6C)alkenyl, (2-6C)alkynyl, (1-6C)alkoxy, formyl, acyl, oxo, carboxy, hydroxyl and an unsaturated 5 or 6-membered carbocyclic ring optionally containing 1 or 2 oxygen atoms within the ring;
   wherein each R₁ is independently optionally substituted with one or groups selected from (1-6C)alkyl, (2-6C)alkenyl, (2-6C)alkynyl, (1-6C)alkoxy, formyl, acyl, oxo, carboxy and hydroxyl;
m is an integer selected from 1, 2, 3, 4, 5 and 6;
providing that the compound according to formula (I) contains at least one oxygen atom; or
the oxygen-containing compound has a structure according to formula (II) shown below: 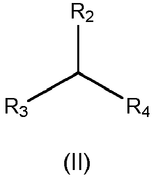 wherein
R₂ is oxo or hydroxyl; and
R₃ and R₄ are independently selected from (1-6C)alkyl, (2-6C)alkenyl, (2-6C)alkynyl, (1-6C)alkoxy, carboxy, oxo and hydroxyl, either of which is optionally substituted with one or more groups selected from (1-6C)alkyl, (2-6C)alkenyl, (2-6C)alkynyl, (1-6C)alkoxy, formyl, acyl, oxo, carboxy and hydroxyl.

In an embodiment, ring A has a structure according to A1, A2, A3 or A4 shown below:

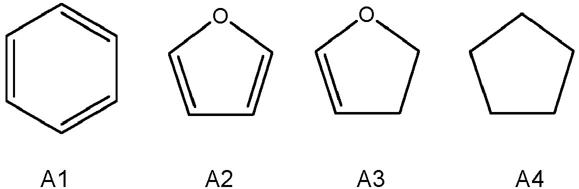

In an embodiment, each R₁ is independently selected from (1-4C)alkyl, (2-4C)alkenyl, (2-4C)alkynyl, (1-4C)alkoxy, formyl, acetyl, oxo, carboxy, hydroxyl and an unsaturated 5 or 6-membered carbocyclic ring optionally containing 1 oxygen atom within the ring;
wherein each R₁ is independently optionally substituted with one or groups selected from (1-4C)alkyl, (2-4C)alkenyl, (2-4C)alkynyl, (1-4C)alkoxy, formyl, acetyl, oxo, carboxy and hydroxyl.

In another embodiment, m is an integer selected from 1, 2, 3, 4, 5 and 6. Suitably, m is an integer selected from 1, 2, 3, 4 and 5.

In another embodiment, R₂ is oxo.

In another embodiment, R₃ and R₄ are independently selected from (1-4C)alkyl, (2-4C)alkenyl, (2-4C)alkynyl, (1-4C)alkoxy, carboxy, oxo and hydroxyl, either of which is optionally substituted with one or more groups selected from (1-3C)alkyl, (2-3C)alkenyl, (2-3C)alkynyl, (1-3C)alkoxy, formyl, acyl, oxo, carboxy and hydroxyl.

In another embodiment, R₃ and R₄ are independently selected from (1-3C)alkyl, (2-3C)alkenyl, (1-3C)alkoxy, carboxy, oxo and hydroxyl, either of which is optionally substituted with one or more groups selected from (1-3C)alkyl, (2-3C)alkenyl, (1-3C)alkoxy, formyl, acyl, oxo, carboxy and hydroxyl.

In an embodiment, the oxygen-containing compound has a structure according to any of the following:

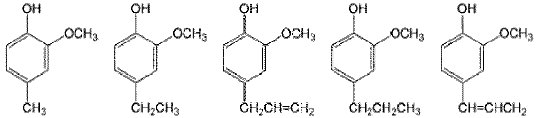

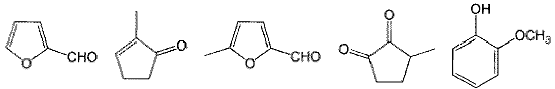

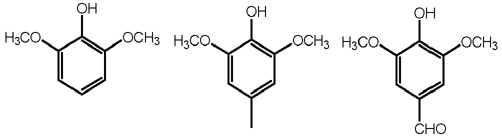

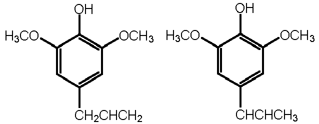

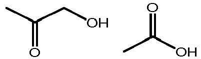

In an embodiment, the oxygen-containing compound is a mixture of oxygen-containing compounds (e.g. a mixture of two or more of the oxygen-containing compounds defined herein). Hence, the present invention also encompasses a process for reducing the overall oxygen content of a mixture of oxygen-containing compounds. In a particularly suitable embodiment, the oxygen-containing compound is a mixture of oxygen-containing compounds derived from plant matter (i.e. a plant-derived feedstock). Suitably, the mixture of oxygen-containing compounds derived from plant matter is a biomass or a bio-oil.

When used, any suitable solvent may be used in the process. Suitably, the solvent is selected from decalin, octane and dodecane. More suitably, the solvent is decalin.

Suitably, step b) comprises heating the mixture of step a) to a temperature of 200-300°C. More suitably, step b) comprises heating the mixture of step a) to a temperature of 220-280°C.

In an embodiment, step b) comprises heating the mixture of step a) to a temperature of 150-300°C. Suitably, step b) comprises heating the mixture of step a) to a temperature of 150-280°C. More suitably, step b) comprises heating the mixture of step a) to a temperature of 150-200°C. Alternatively, step b) comprises heating the mixture of step a) to a temperature of 220-270°C.

In another embodiment, step b) is performed for 0.1 to 20 hours. Suitably, step b) is performed for 0.1 to 17 hours. Suitably, step b) is performed for 0.1 to 10 hours. Suitably, step b) is performed for 0.1 to 5 hours. More suitably, step b) is performed for 0.5 to 3 hours.

In an embodiment, step b) is performed for 12 to 18 hours

In another embodiment, step b) is performed under H₂ at 0.5 to 30 MPa. Suitably, step b) is performed under H₂ at 1 to 30 MPa. Suitably, step b) is performed under H₂ at 5 to 30 MPa. More suitably, step b) is performed under H₂ at 15 to 25 MPa.

In an embodiment, step b) is performed under H₂ at 0.5 to 3 MPa.

### EXAMPLES

One or more examples of the invention will now be described, for the purpose of illustration only, with reference to the accompanying figures, in which:
Fig. 1 illustrates the colour change from yellow to blue that occurs when the catalyst precursor (calcined sample) is reduced in H₂ at room temperature to the Pd/reduced-POM/SiO₂ of Example 1a, compared with the colour change from yellow to black that is observed when the same catalyst precursor (calcined sample) is reduced in H₂ at 650°C.
Fig. 2 illustrates TEM images of mono-dispersed 2 nm nanoparticles of the Pd/reduced-POM/SiO₂ of Example 1a.
Fig. 3 shows STEM mapping of Mo, P and Pd elements in a mono-dispersed nanoparticle of the Pd/reduced-POM/SiO₂ of Example 1a.
Fig. 4 shows the ³¹P NMR spectrum of the Pd/reduced-POM/SiO₂ of Example 1a.
Fig. 5 shows the XANES spectrum of the Pd/reduced-POM/SiO₂ of Example 1a.
Fig. 6 shows the XPS spectra of a) catalyst precursor (calcined sample) of the Pd/reduced-POM/SiO₂ of Example 1a, and b) the Pd/reduced-POM/SiO₂ of Example 1a.
Fig. 7 shows the TPR spectrum of the catalyst precursor (calcined sample) of the Pd/reduced-POM/SiO₂ of Example 1a.
Fig. 8 compares the activity and selectivity of the Pd/reduced-POM/SiO₂ of Example 1d (82#) with a variety of comparator HDO catalysts (83# was prepared in the same manner as 82#, except that Pd(NO₃)₂ was used as the Pd precursor, and no Brønsted acid was added; 84# is a commercially-available catalyst containing Pd(1 wt%) supported on alumina; and 85# is a catalyst based on Pd and molybdenum phosphide supported on SiO₂).
Fig. 9 compares the selectivity of the Pd/reduced-POM/SiO₂ of Example 1d (82#) for producing cyclohexane as the HDO product of 2,6-dimethoxyphenol with that of three other HDO catalysts (83# was prepared in the same manner as 82#, except that Pd(NO₃)₂ was used as the Pd precursor, and no Brønsted acid was added; 84# is a commercially-available catalyst containing Pd(1 wt%) supported on alumina; and 85# is a catalyst based on Pd and molybdenum phosphide supported on SiO₂).
Fig. 10 compares the catalytic activity and selectivity of the HDO of 2,6-dimethoxyphenol using the Pd/reduced-POM/SiO₂ of Example 1a, when compared with a commercial Pd(1%)/Al₂O₃ HDO catalyst.
Fig. 11 shows the GC-MS spectra of the product of 2,6-dimethoxyphenol after HDO reaction for a) 1 hour with the Pd/reduced-POM/SiO₂ of Example 1d, and b) 2 hours with a commercial Pd(1%)/Al₂O₃ catalyst.
Fig. 12 shows conversion (of 2,6-dimethoxyphenol to reaction products) and selectivity (for oxygen-free reaction products) data for the Pd/reduced-POM/SiO₂ of Example 1f-catalysed HDO of 2,6-dimethoxyphenol after various reaction time points.

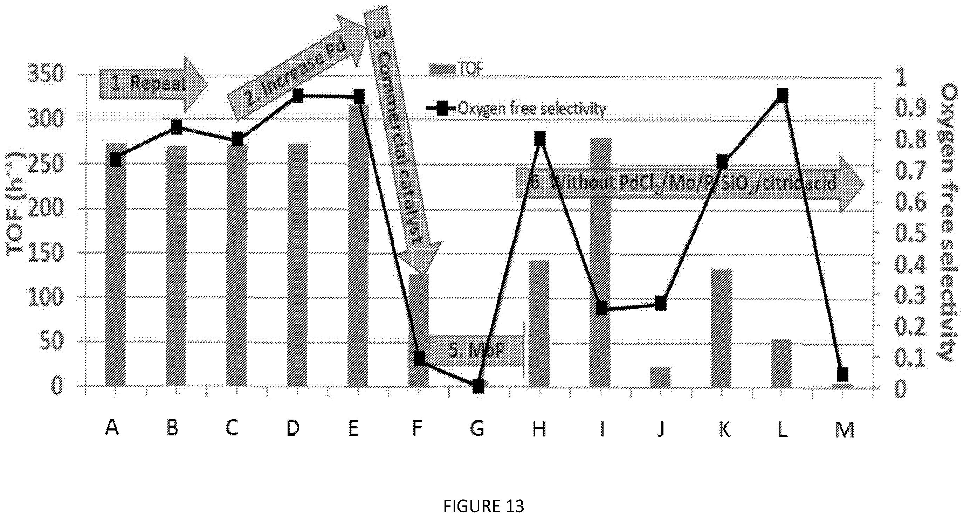

Fig. 13 shows the effect of varying the Pd content within the catalytic compounds of the invention (A-E) on their ability to catalyst the HDO of 2,6-dimethoxyphenol, when compared with that of a number of comparator complexes (F-M) (A - one step synthesis of Pd/reduced-POM/SiO₂ of Example 1c; B - repeat of A; C - one step synthesis of the Pd/reduced-POM/SiO₂ of Example 1b; D - repeat of A/B; E - one step synthesis of the Pd/reduced-POM/SiO₂ of Example 1e; F - commercial catalyst based on Pd(1 wt%) supported on alumina; G - Pd and molybdenum phosphide supported on SiO₂; H - identical to catalyst used in A, except that Pd(NO₃)₂ was used as the Pd precursor, and no Brønsted acid was added; I - identical to catalyst used in A, except that no Mo used; J - identical to catalyst used in A, except that no P used; K - identical to catalyst used in A, except that no citric acid used; L - identical to catalyst used in A, except that no SiO₂ support used); M - identical to catalyst used in A, except that CeO₂ used instead of SiO₂ support.
Fig. 14 compares the activity and selectivity of the Pd/reduced-POM/SiO₂ of Example 1a when prepared according to the one-step and two-step techniques.
Fig. 15 compares the activity and selectivity of the Pd/reduced-POM/SiO₂ of Example 1a prepared by the two-step route, when reduction step c) is performed for different durations.
Fig 16 compares the activity and selectivity of the Pd/reduced-POM/SiO₂ of Example 1a prepared by the two-step route, when reduction step c) is performed for 23 hours under i) direct flow of H₂, and ii) swirling H₂ in a flask.
Fig. 17 shows the effect on the catalytic performance of the Pd/reduced-POM/SiO₂ of Example 1a of omitting key components (e.g. Mo, P, citric acid and support) from the synthesis of the catalyst.
Fig. 18 shows the effect on the catalytic performance of the Pd/reduced-POM/SiO₂ of Example 1a of increasing the concentration of the 2,6-dimethoxyphenol substrate and the Pd/reduced-POM/SiO₂ (by a factor of 1.8).
Fig. 19 compares the phenol conversion and cyclohexane selectivity of the Pd/reduced-POM/SiO₂ of Example 1c, when compared with Pd/SiO₂ in a batch reaction.
Fig. 20 shows the time dependence of the phenol conversion and product selectivity of the Pd/reduced-POM/SiO₂ of Example 1c in a batch reaction.
Fig. 21 shows long-term stability test of the Pd/reduced-POM/SiO₂ of Example 1c at 433 K, 1 MPa H₂ with a weight hourly space velocity of 0.17 h-1 in a continuous flow reaction.
Fig 22 shows long-term stability and regenerability test of Pd/reduced-POM/SiO₂ of Example 1c in continuous flow reaction at 453 K, 1 MPa H₂ with WHSV of 0.085 h⁻¹ for 3 cycles over 419 h. 1st run for 135 h, 2nd run for 164 h and 3rd run for 120 h.

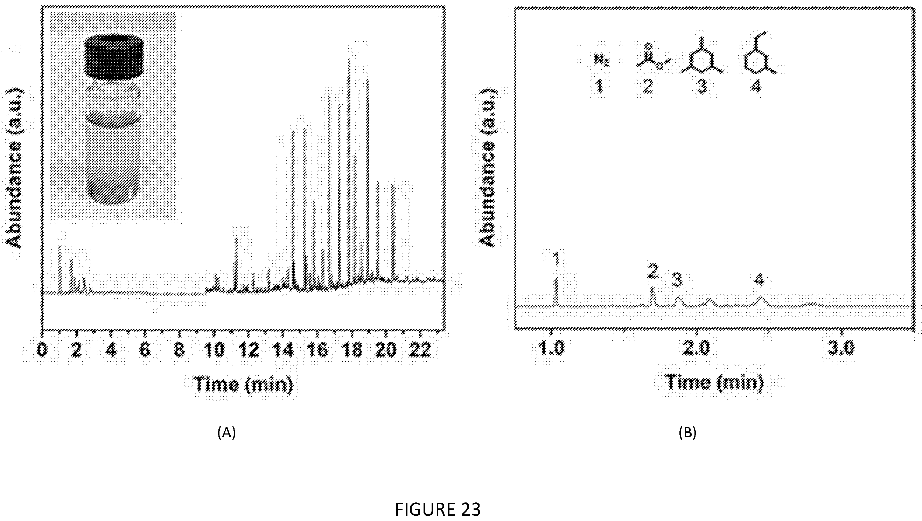

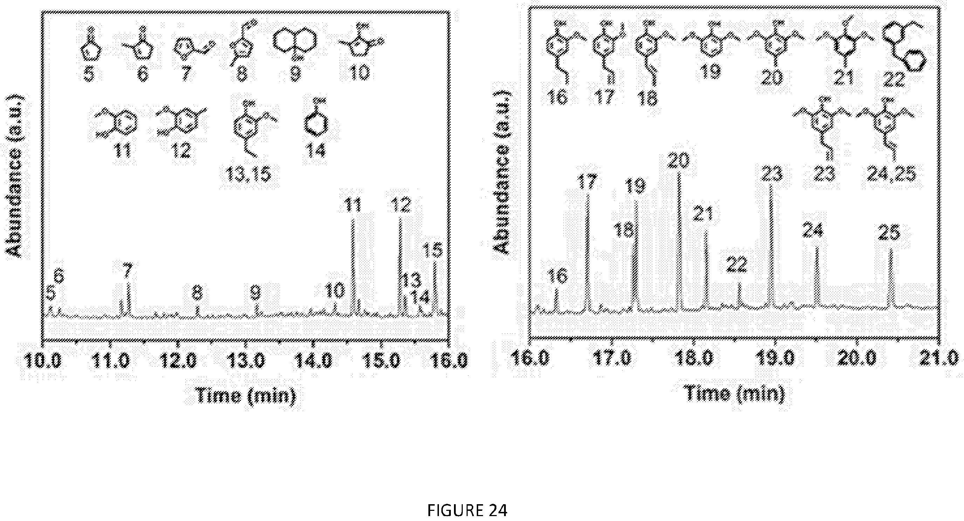

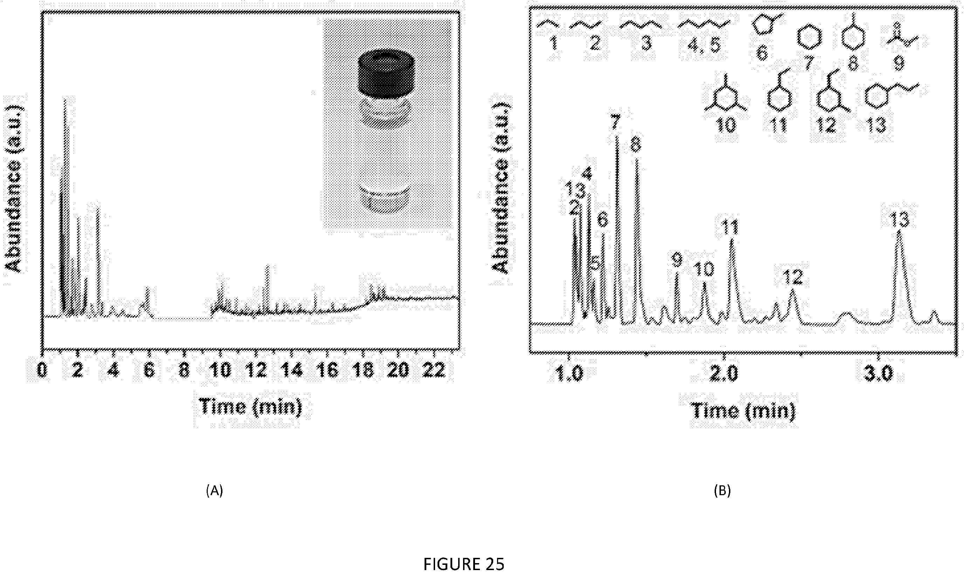

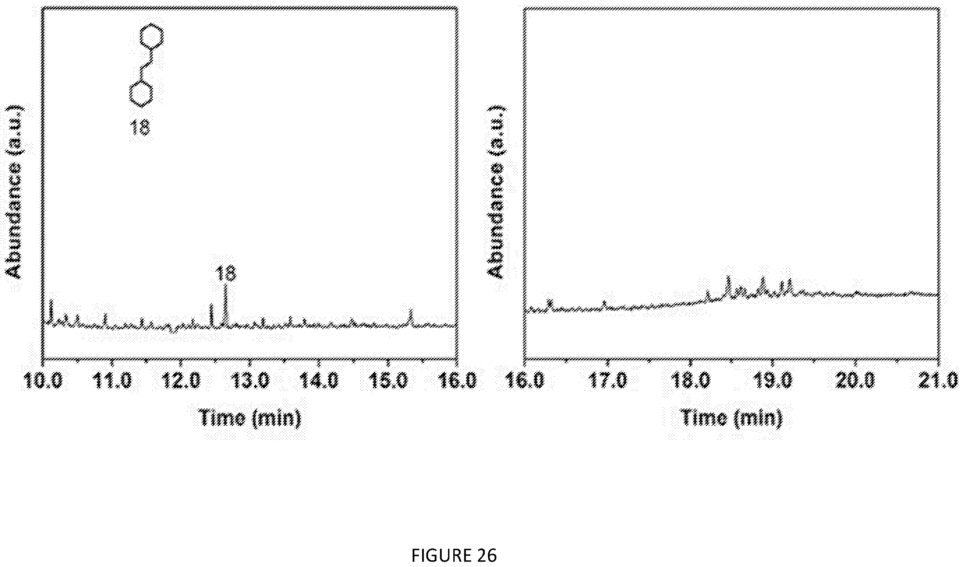

Figs. 23-26 show gas chromatograph-mass spectrometry analysis of water-insoluble fraction of bio-oil (WIBO) derived from flash pyrolysis of eucalyptus wood and bark before and after upgrading. Figs. 23-24 show the GC-MS pattern of the WIBO in decalin before upgrading. The overall GC-MS pattern is shown in Fig. 23a, with Fig. 23b and Fig. 24 showing three enlarged regions of the overall pattern. Figs. 25-26 show the GC-MS pattern of the WIBO in decalin after upgrading. The overall GC-MS pattern is shown in Fig. 25a, with Fig. 25b and Fig. 26 showing three enlarged regions of the overall pattern. Insets in Figs 23a and 25a show the images of mixtures before and after upgrading, respectively.
Fig. 27 shows the energy dispersive X-ray spectroscopy of a representative region of the Pd/m-MoO₃-P₂O₅/SiO₂ of Example 1g and corresponding HAADF-STEM image. According the inset table, the molar ratio of Pd/Mo/P = 0.072/1.0/1.1.

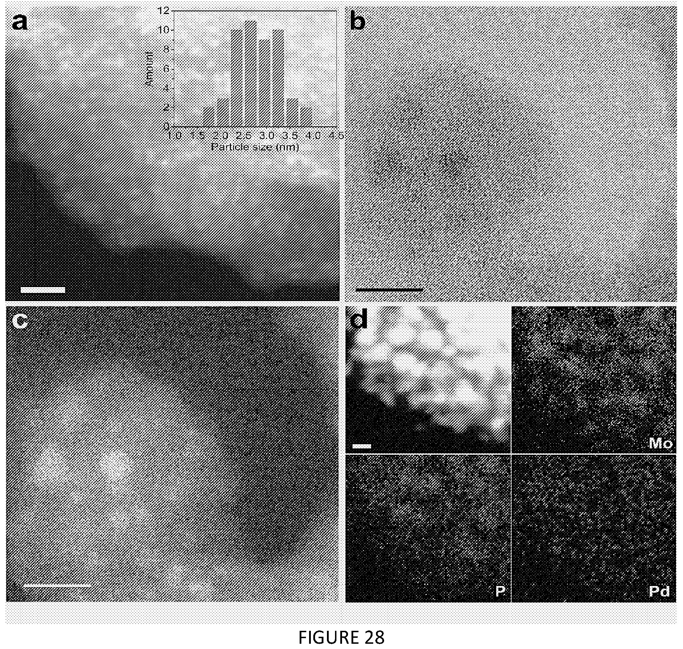

Fig. 28 shows **a)** High-angle annular dark-field scanning transmission electron microscopy image of Pd/m-MoO₃-P₂O₅/SiO₂ of Example 1g. Inset shows the size distribution of the clusters. Scale bar equals 20 nm. **b)** Aberration-corrected annular-bright-field scanning transmission electron microscope image and **c)** corresponding high-angle annular dark-field scanning transmission electron microscopy image of Pd/m-MoO₃-P₂O₅/SiO₂. Scale bars equal 5 nm. d) STEM-EDS elemental mapping results for Pd/m-MoO₃-P₂O₅/SiO₂, showing a homogeneous distribution of the elements within clusters. Scale bar equals 3 nm.
Fig. 29 shows the X-ray diffraction pattern of the Pd/m-MoO₃-P₂O₅/SiO₂ of Example 1g.
Fig. 30 shows the solid state ³¹P MAS NMR spectra of Pd/m-MoO₃-P₂O₅/SiO₂ of Example 1g.
Fig. 31 shows the Raman spectrum of Pd/m-MoO₃-P₂O₅/SiO₂ of Example 1g.

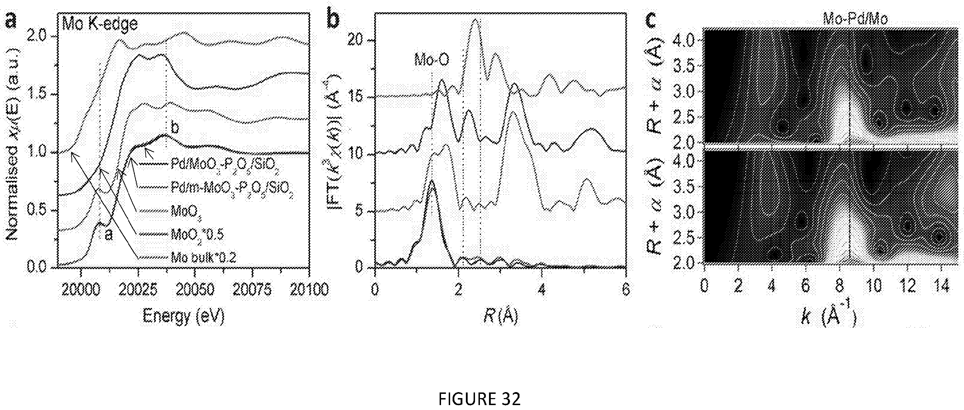

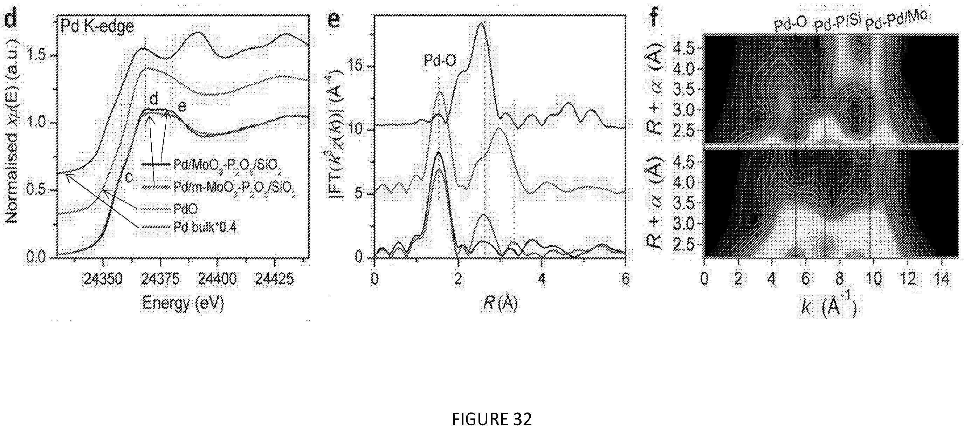

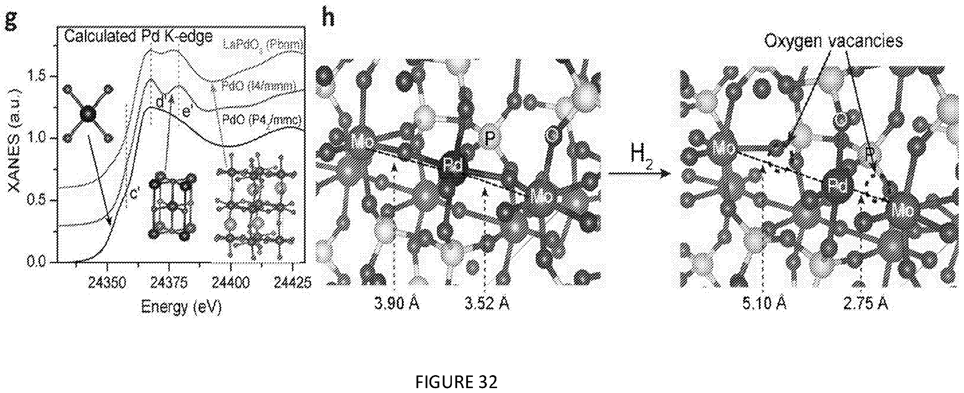

Fig. 32 shows XAFS characterisation of the local coordination of Mo/Pd atoms in the bifunctional catalyst Pd/m-MoO₃-P₂O₅/SiO₂ of Example 1g. **a)** The experimental Mo K-edge XANES spectra and **b)** EXAFS Fourier transforms of Pd/m-MoO₃-P₂O₅/SiO₂, its precursor Pd/MoO₃-P₂O₅/SiO₂, and references. **c)** Comparison of the wavelet transforms for the *k*³-weighted Mo K-edge EXAFS signals for the high coordination shells in Pd/MoO₃-P₂O₅/SiO₂ (upper panel) and Pd/m-MoO₃-P₂O₅/SiO₂ (lower panel). **d)** The experimental Pd K-edge XANES spectra and **e)** EXAFS Fourier transforms of Pd/m-MoO₃-P₂O₅/SiO₂, Pd/MoO₃-P₂O₅/SiO₂, and references. **f)** Comparison of the wavelet transforms for the *k*³-weighted Pd K-edge EXAFS signals for the high coordination shells in Pd/MoO₃-P₂O₅/SiO₂ (upper panel) and Pd/m-MoO₃-P₂O₅/SiO₂ (lower panel). **g)** The theoretical XANES spectra calculated with the depicted square planer (PdO-*P*4₂/*mmc*) and distorted octahedral (PdO-*I*4/*mmm* and LaPdO₃-*Pbnm*) structures. **h)** Schematic representation of structural modulation due to the production of oxygen vacancies in the oxygen network by H₂ reduction. The vertical dashed lines are provided to guide the eye.

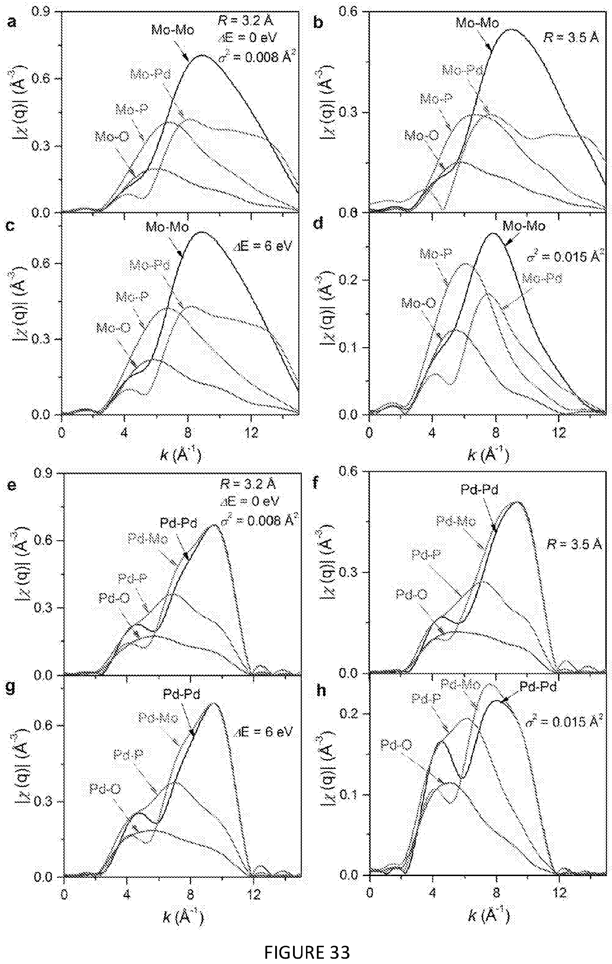

Fig. 33 shows a comparison of the q-space magnitudes for FEFF-calculated, *k*³-weighted EXAFS paths. The wavelet transform maximum corresponds to the same location of the maximum in the q-space magnitude and is known to be affected by atomic number Z, the path length R, energy shift *ΔE*, and Debye-Waller factors σ², thus allowing qualitative interpretation of the scattering path origins for the wavelet transform maxima. **a**,**e**) The effect of atomic number Z (*R*, σ² and *ΔE* are fixed) on the paths. **b**,**f**) The effect of the path length R on the paths (σ² and *ΔE* are fixed). **c**,**g**) The effect of the energy shift *ΔE* on the paths (R and σ² are fixed). **d**,**h**) The effect of the Debye-Waller factors σ² on the paths (R and *ΔE* are fixed). It can be observed that the Mo-Pd/Mo path shows one maximum near 8.5 Å⁻¹, while Pd-Pd/Mo path shows one maximum near 9.5 Å⁻¹ associated with a shoulder around 4.5 Å⁻¹. Besides, the Pd(Mo)-P/Si path shows one maximum near 7.0 Å⁻¹ and the Pd(Mo)-O path shows one maximum near 5.5 Å⁻¹.
Fig. 34 shows solid state ³¹P MAS NMR spectra of trimethylphosphine oxide (TMPO)-adsorbed on the catalyst (of Example 1g)) before and after H₂ reduction (up and down, respectively). Inset displayed TMPO molecule.
Fig. 35 shows N₂ adsorption/desorption isotherm of Pd/m-MoO₃-P₂O₅/SiO₂ (catalyst of Example 1g), in red), Pd/MoO₃-P₂O₅/SiO₂ (catalyst of Example 1g) precursor, in black) and Pd/P₂O₅/SiO₂ (in blue). See Table 3 for BET surface area data.

### Instrumentation and methods

HRTEM images were acquired with JEOL JEM-2100F field emission transmission electron microscope (TEM) with an accelerating voltage of 200 kV.

Aberration-corrected TEM was performed on JEOL 200F transmission electron microscope operated at 200 keV. The attainable spatial resolution of the microscope is 78 pm with a probe spherical-aberration corrector. Both annular-bright-field (ABF) and high-angle annular-dark-field (HAADF) were obtained with the illumination semi-angle of 25 mrad and probe current of 100 pA. The dwell time for imaging was set at 10 ms per pixel to ensure desirable signal to noise ratio. The collection angles for the ABF and HAADF images were fixed at 12-25 and 90-250 mrad, respectively. Energy dispersive X-ray spectroscopy (EDX) was performed to locate elemental distribution of Mo, P and Pd with an SDD-type EDX detector. The attainable energy-resolution of the EDX detector is 130 eV. A higher beam current of 300 pA was used with a longer dwell time of 0.1 ms per pixel repeated for 200 times. Spatial drift was corrected with a simultaneous image collector. Mo L-edge, P K-edge and Pd L-edge were used for elemental mapping.

XRD data were obtained on a PANAnalytical X'Pert Pro diffractometer in reflection mode at 40 kV and 40 mA using Cu Kα radiation.

Raman spectra were recorded on a Renishaw Raman spectrometer at a laser excitation wavelength of 633 nm.

Temperature programmed reduction (TPR) was performed on Micromeritics AutoChem II 2920 using a flow of H₂ in N₂ (10%, 50 mL minutes⁻¹) ramping from 309 to 1073 K at a rate of 5.0°K minutes⁻¹.

X-ray photoelectron spectroscopy (XPS) analysis was carried out on a ULVAC PHI Quantera microprobe using AI K Alpha as the source type, and with spot size of 500 µm, pass energy of 30.0 eV and energy step size of 0.050 eV. Carbon at 284.80 eV was used as the standard.

Specific surface areas were analysed by Micromeritics Tristar II. The samples were measured for the N₂ adsorption and desorption at 77 K. Before each measurement, the samples were first *in situ* degassed overnight at 110 °C for 12 hours.

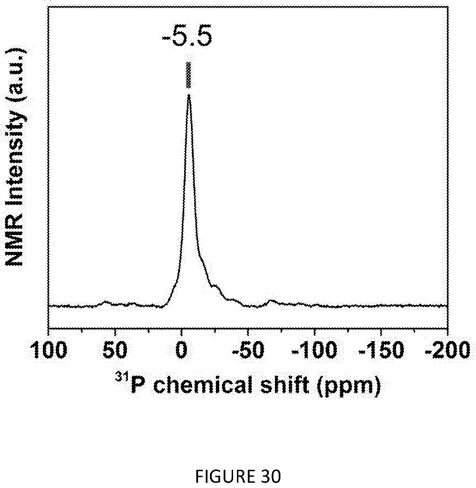

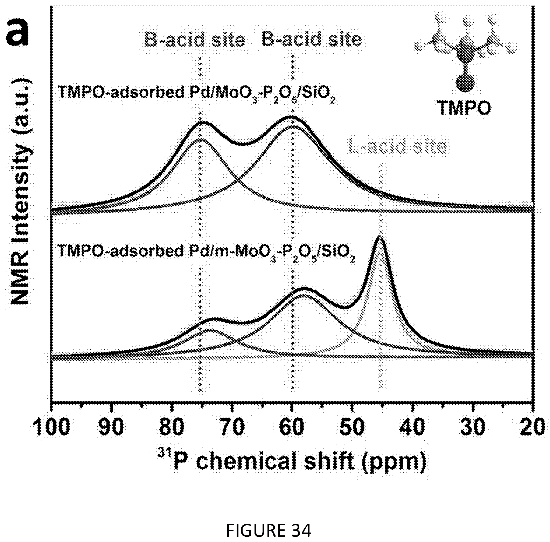

Solid state magic angle spinning (MAS) NMR spectroscopy experiments were carried out using a Bruker Avance III 400WB spectrometer at room temperature. To remove the effect of proton spins on quantitative ³¹P spectra (i.e. Fig. 34), a strong radio frequency field (B) is usually applied at the resonance frequency of the non-observed abundant spins (¹H herein) which contribute to the coupling of both spin species. The high power decoupling (HPDEC) was thus used for the quantitative ³¹P analysis. Considering the long relaxation time of ³¹P nuclei in NMR spectroscopy experiment, 30° pulse with 1.20 µs width and 15 s delay time. The radiofrequency for decoupling was 59 kHz. The spectral width was 400 ppm, from 200 to -200 ppm. The number of scanning was 800 and spinning frequency was 10 kHz. The ³¹P chemical shifts were reported relative to 85% aqueous solution of H₃PO₄, with NH₄H₂PO₄ as a secondary standard (0.81 ppm). The quantitative analysis of adsorbed TMPO molecules was then calculated according to the calibration line established by running standard samples with various adsorbed TMPO concentration. On the other hand, for samples without adsorbing TMPO (Fig. 30), the ¹H-³¹P cross polarization (CP) was used.

Trimethylphosphine oxide (TMPO)-adsorbed sample preparation for ³¹P MAS NMR spectroscopy: 100 mg of the catalyst was placed in a home-made glass tube, activated at 298 K for 2 hour under vacuum (10⁻¹ Pa), mixed with a CH₂Cl₂ solution containing 0.1 M TMPO under nitrogen, treated by ultrasound for 1 hour (for equilibrium), and then solvent was evacuated under vacuum. Finally, the sample tube was sealed for storage and transferred to Bruker 4 mm ZrO₂ rotor with a Kel-F endcap in a glove box under nitrogen atmosphere before NMR spectroscopy measurement.

### Example 1 - Preparation of catalytic compounds

### General procedures

One step method: an appropriate amount of noble metal precursor (e.g. PdCl₂) in aqueous acidic (e.g. HCI) solution, metal precursors (e.g. (NH₄)₆Mo₇O₂₄ for example), and hetero(central) atom precursor (e.g. (NH₄)₂HPO₄), and an excess amount of carboxylic/polycarboxylic acid (e.g. citric acid) were dissolved in de-ionised water, the volume of which was determined by the water adsorption volume of inorganic support used. The solution was stirred for 1 h and then dropwise added to the inorganic support (e.g. SiO₂) with proper amount. The obtained glue-like sample was dried in an oven at 397 K for overnight and calcined at proper temperature in muffle furnace for several hours at rising rate of 5 K/min. The calcined sample was then reduced in H₂ at room temperature (22 °C) for overnight. The sample was subsequently protected with N₂ for 1 h prior to removal from the tube reactor for catalytic reaction. The variation of optical characteristics from yellow (calcined product) to greenish-blue (reduced product) can be interpreted by the reversible charge transfer of POMs.

Two step method: A proper amount of addenda metal precursors (e.g. (NH₄)₆Mo₇O₂₄), central atom precursor (e.g. (NH₄)₂HPO₄) and excess amount of carboxylic/polycarboxylic acid (e.g. citric acid) were dissolved in de-ionised water, the volume of which was determined by the water adsorption volume of inorganic support used. The solution was stirred for 1 h and then dropwise added to the inorganic support (e.g. SiO₂) with proper amount. The obtained glue-like sample was dried in an oven at 397 K for overnight and calcined at proper temperature in muffle furnace for several hours at rising rate of 5 K/min. The calcined sample was then collected and dispersed in a proper amount of metal precursor (e.g.PdCl₂) aqueous acidic (e.g. HCI) solution and repeated the drying and calcining process as described above. Then the sample was reduced in H₂ at room temperature (22 °C) for overnight with flowing rate of 75 cm³/min, followed by purging with N₂ for 1 h. The obtained sample was collected and ready for catalytic reaction.

### Example 1a - Preparation of Pd/reduced-POM/SiO₂ containing 0.75 wt% (theoretical) Pd

As depicted in Scheme 2 below, (NH₄)₆Mo₇O₂₄·4H₂O (0.05495 g), (NH₄)₂HPO₄ (0.0412 g), citric acid (0.11975 g) were dissolved in 0.5 mL de-ionized water. The mixture was stirred for 1 h and then dropwise added to SiO₂ (0.25 g). The obtained glue-like sample was dried in an oven at 397 K for overnight and calcined at 773 K in flow air at a flow rate of 20 cm³/min) or muffle furnace for 5 h at rising rate of 5 K/min. The calcined sample was weighed and 80 mg of it was dispersed in a 0.2 mL of PdCl₂ aqueous HCI solution, together with an additional 0.2 mL of deionised water. The drying and calcining process was repeated as described above. Then the sample was reduced in H₂ at room temperature (22 °C) for overnight with flowing rate of 75 cm³/min, followed by purging with N₂ for 1 h. The variation of optical characteristics from yellow (calcined product) to greenish-blue (reduced product) can be interpreted by the reversible charge transfer of POMs. The obtained sample was collected and ready for catalytic reaction. 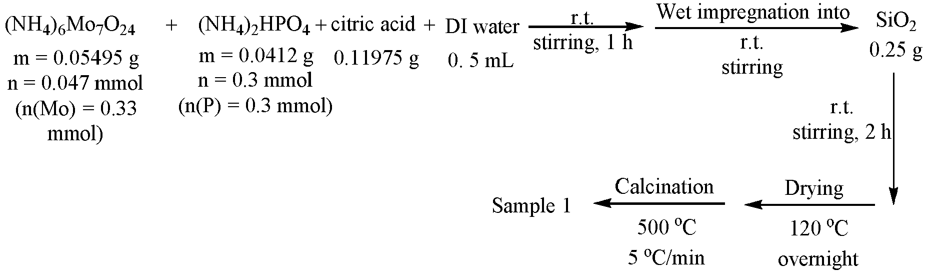 Preparation of PdCl₂ solution: 250 mg of PdCl₂ was dissolved into 6 mL of HCl (37 %) solution and diluted with another 44 mL of water, forming a PdCl₂ solution with PdCl₂ concentration of 5 mg/mL.

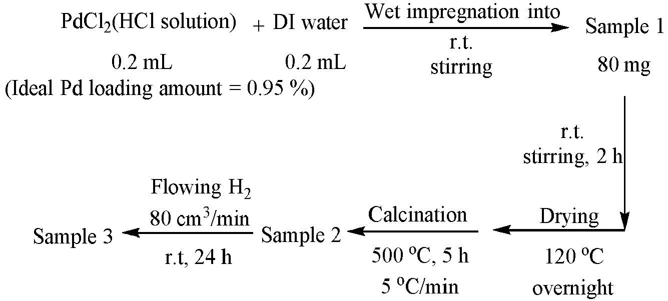

### Scheme 2 - preparation of Pd/reduced-POM/SiO₂ containing 0.75 wt% (theoretical) Pd

### Examples 1b-f - Preparation of Pd/reduced-POM/SiO₂ having varying Pd loadings

A variety of other catalytic compounds were prepared using the protocol described in Example 1a, by varying the quantity of PdCl₂ solution added:
Example 1b - To produce Pd/reduced-POM/SiO₂ having a theoretical Pd loading of 0.54 wt%, 0.14 mL (instead of 0.2 mL) of PdCl₂ was added during the protocol described in Example 1a.
Example 1c - To produce Pd/reduced-POM/SiO₂ having a theoretical Pd loading of 0.8 wt%, 0.21 mL (instead of 0.2 mL) of PdCl₂ was added during the protocol described in Example 1a.
Example 1d - To produce Pd/reduced-POM/SiO₂ having a theoretical Pd loading of 0.9 wt%, 0.24 mL (instead of 0.2 mL) of PdCl₂ was added during the protocol described in Example 1a.
Example 1e - To produce Pd/reduced-POM/SiO₂ having a theoretical Pd loading of 1.1 wt%, 0.29 mL (instead of 0.2 mL) of PdCl₂ was added during the protocol described in Example 1a.
Example 1f - To produce Pd/reduced-POM/SiO₂ having a theoretical Pd loading of 1.2 wt%, 0.32 mL (instead of 0.2 mL) of PdCl₂ was added during the protocol described in Example 1a.
Example 1g - Following a similar protocol to that described in Examples 1a-f, (NH₄)₆Mo₇O₂₄·4H₂O (0.021 mmol), (NH₄)₂HPO₄ (0.150 mmol), citric acid (0.30 mmol) were dissolved in 0.3 mL of HCI aqueous solution containing PdCl₂ (1.5 mg). The mixture was stirred for one hour and then added dropwise to SiO₂ (0.12 g). The obtained glue-like sample was dried in an oven at 397 K overnight and calcined at 773 K in muffle furnace for five hours at rising rate of 5 K/minutes. The calcined sample, named as Pd/MoO₃-P₂O₅/SiO₂, was reduced in H₂ at 323 K for 3 hours with a flowing rate of 75 cm³/minutes. The calcined sample changed to a greenish-blue colour following reduction. This reduced sample is named Pd/m-MoO₃-P₂O₅/SiO₂.

### Example 2a - Characterisation of catalytic compounds

### Characterisation of catalytic compound Pd/reduced-POM/SiO₂ of Example 1a

### Colour change

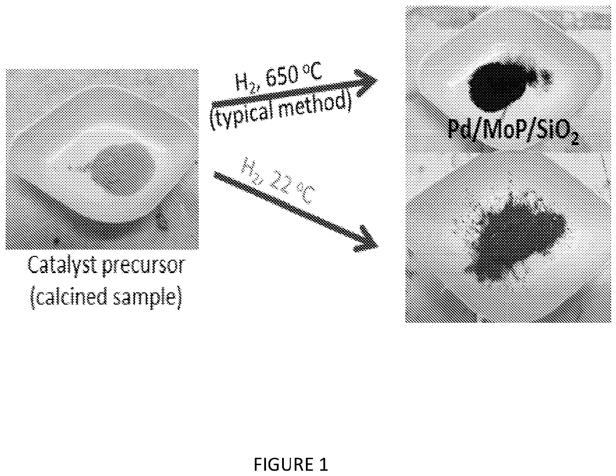

Fig. 1 illustrates the colour change from yellow to blue that occurs when the catalyst precursor (calcined sample) is reduced in H₂ at room temperature to the Pd/reduced-POM/SiO₂ of Example 1a. The colour change from yellow to blue is contrasted with the colour change from yellow to black that is observed when catalyst precursor (calcined sample) is reduced in H₂ at 650°C.

### Transmission Electron Microscopy (TEM)

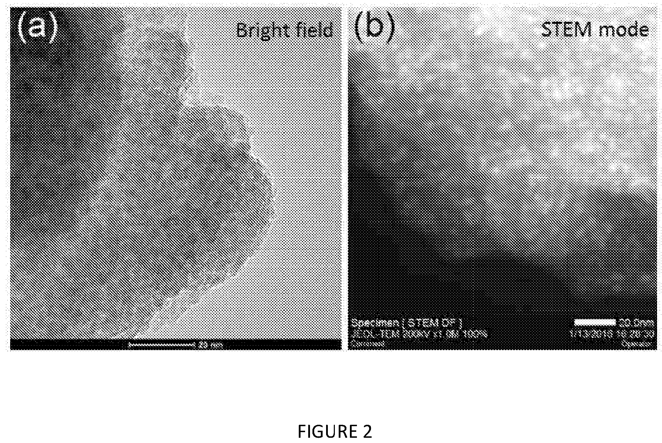

Fig. 2 illustrates TEM images of mono-dispersed 2 nm nanoparticles of the Pd/reduced-POM/SiO₂ of Example 1a. The images show that the catalyst are in ultra-small size and mono-dispersed on the support.

### Scanning Transmission Electron Microscopy (STEM) mapping

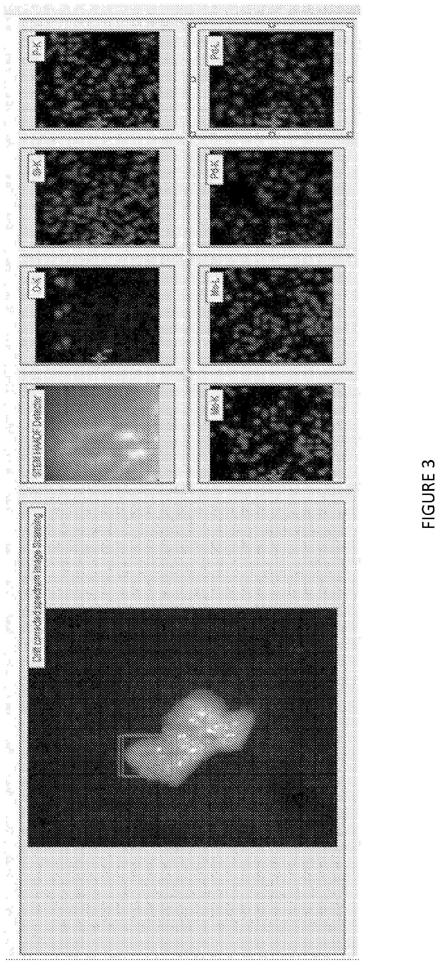

Fig. 3 shows STEM mapping of Mo, P and Pd elements in a mono-dispersed nanoparticle of the Pd/reduced-POM/SiO₂ of Example 1a.

### ³¹P NMR

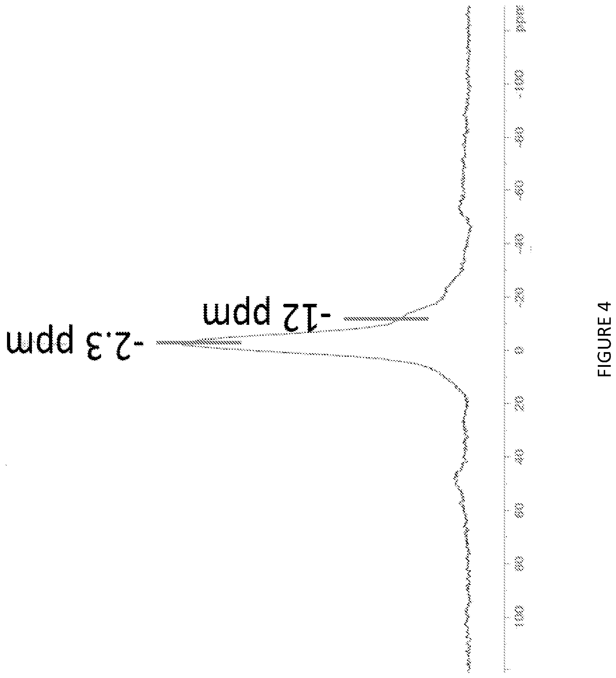

Fig. 4 shows the ³¹P NMR spectrum of the Pd/reduced-POM/SiO₂ of Example 1a. The signal at -2.3 ppm is understood to be due to H₃PMo₁₂O₄₀, whereas the signal at -12 ppm is likely linked to monomeric phosphate and short chain polymeric species.

### X-ray Absorption Near Edge Structure (XANES)

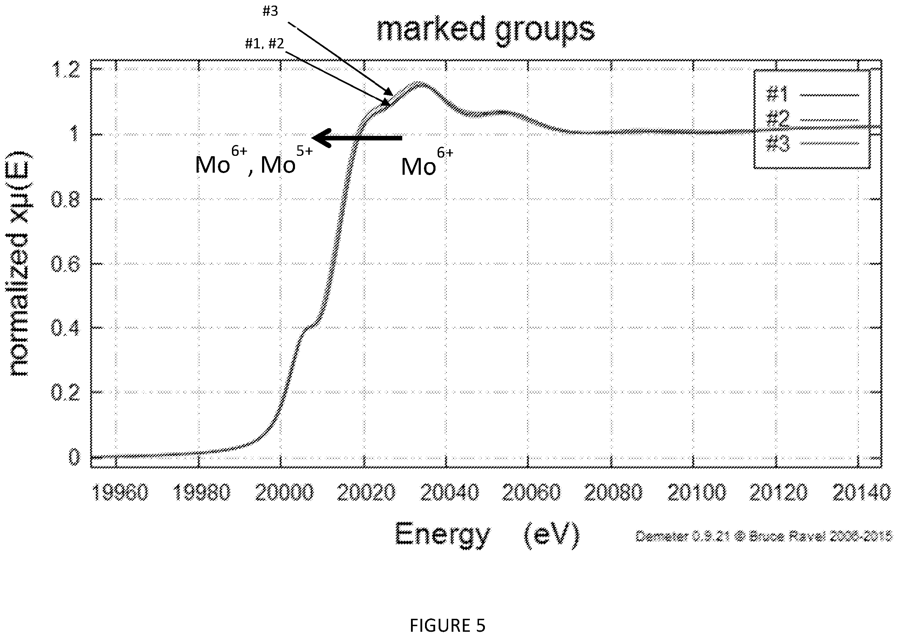

Fig. 5 shows the XANES spectrum of the Pd/reduced-POM/SiO₂ of Example 1a. After reducing of catalyst precursor and generating the catalyst, the curve shift showed by the arrow indicates that partial Mo(VI) was reduced to Mo(V)..

### X-ray Photoelectron Spectroscopy (XPS)

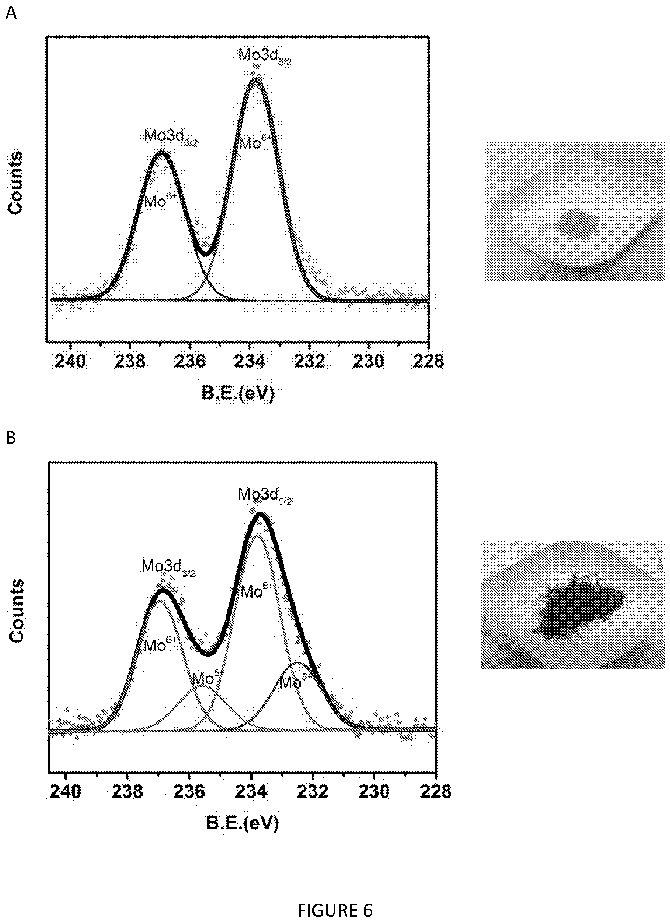

Fig. 6 shows the XPS spectra of a) catalyst precursor (calcined sample), and b) the Pd/reduced-POM/SiO₂ of Example 1a. It is seen that the catalyst precursor shows only Mo(VI), whereas the Pd/reduced-POM/SiO₂ of Example 1a shows a mixture of Mo(V) and Mo(VI).

### Temperature Programmed Reduction (TPR)

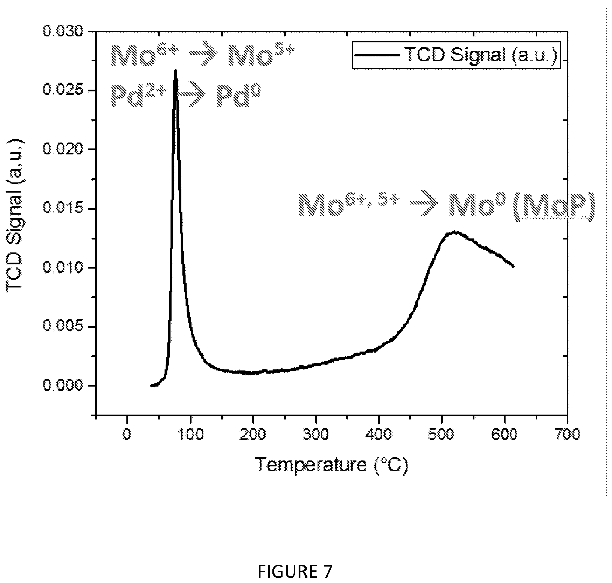

Fig. 7 shows the TPR spectrum of the precursor (calcined sample) of Pd/reduced-POM/SiO₂ of Example 1a.

### Example 2b - Extended characterisation of catalytic compounds

The following characterisation discussion and data are applicable to the Pd/reduced-POM/SiO₂ prepared in Example 1g.

As described in Example 1g, the solid catalyst, Pd/m-MoO₃-P₂O₅/SiO₂ was prepared using a wet-impregnation method, in which 'm' represents mixed-valent Mo. Transmission electron microscopy (TEM) image of the Pd/m-MoO₃-P₂O₅/SiO₂ (Fig. 2a)) shows small electron-rich m-MoO₃-P₂O₅ clusters supported on an amorphous SiO₂ gel. A high-angle annular dark-field scanning transmission electron microscopy (HAADF-STEM) image (Fig. 28a)) shows dispersed 2.8 ± 1.0 nm m-MoO₃-P₂O₅ clusters (inset, Fig. 28a)) with high coverage.

Inductively coupled plasma mass spectrometry (ICP-AES) analysis showed that the actual Pd loading is 0.48 wt% with a Mo:P molar ratio of ca. 1 (Table 1).

**Table 1 : ICP-AES analysis.**

| **Materials** | **Pd (wt%)** | **Mo (wt%)** | **P (wt%)** |
|---|---|---|---|
| Pd/m-MoO₃-P₂O₅/SiO₂ | 0.48 | 7.7 | 2.2 |
| Pd/SiO₂^{†} | 0.56 | - | - |
| Pd/P₂O₅/SiO₂^{††} | 0.79 | - | 2.3 |
| Spent Pd/m-MoO₃-P₂O₅/SiO₂* | 0.45 | 6.6 | 2.2 |

| | | | |
|---|---|---|---|
| ^{†} Pd/SiO₂ was prepared by dropwise addition of 0.3 mL of prepared PdCl₂ solution into SiO₂ under strong stirring. ^{††} The synthesis of Pd/P₂O₅/SiO₂ was similar as for Pd/m-MoO₃-P₂O₅/SiO₂, except with no addition of (NH₄)₆Mo₇O₂₄·4H₂O. *The spent sample is the one used after 63-hour continuous flow reaction. | | | |

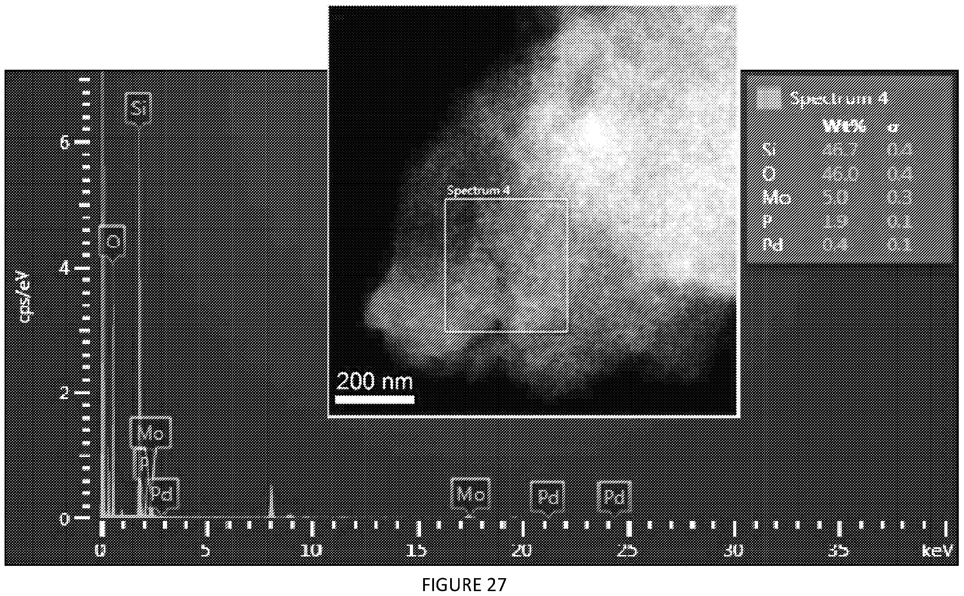

The ICP-AES data are consistent with Energy Dispersive X-ray spectroscopy (EDXS) data (Fig. 27). Aberration-corrected annular bright-field scanning transmission electron microscope (ABF-STEM) image (Fig. 28b)) and corresponding high-angle annular dark-field scanning transmission electron microscopy (ADF-STEM) image (Fig. 28c)) clearly show the m-MoO₃-P₂O₅ clusters do not form a crystalline lattice. Elemental mapping revealed that Mo and P are evenly dispersed throughout the m-MoO₃-P₂O₅ clusters, and the Pd is highly dispersed (Fig. 28d)). Due to the similar atomic number of Pd and Mo, it is difficult to distinguish Pd using the intensity information in the HAADF-STEM image.

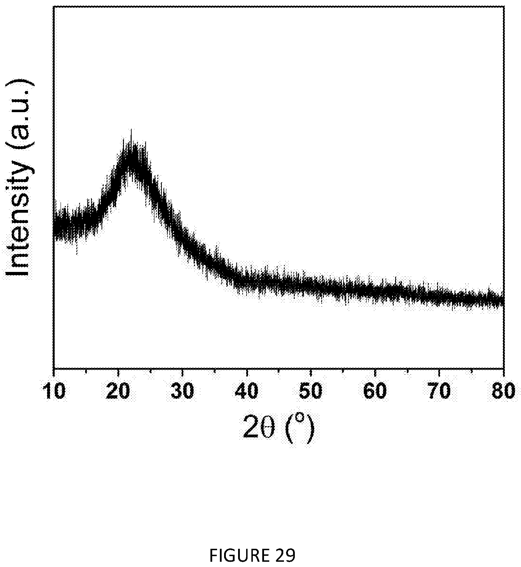

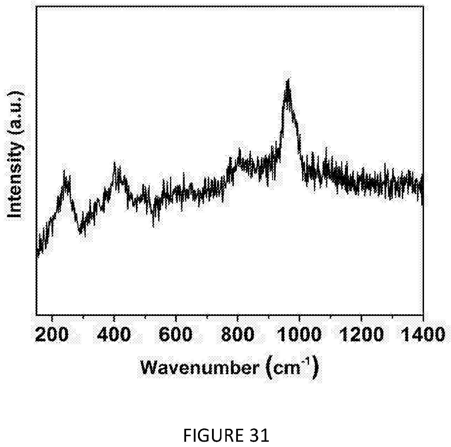

The powder X-ray diffractogram of a sample of the Pd/m-MoO₃-P₂O₅/SiO₂ (Fig. 29) exhibits no Bragg diffraction except for a broad feature due to the amorphous SiO₂ support. These data suggest that Pd is present in ultra-small size and m-MoO₃-P₂O₅ clusters are crystalographically disordered. The nature of the m-MoO₃-P₃O₅ clusters was further investigated with the help of multinuclear solid state NMR spectroscopy. The ³¹P solid state MAS NMR spectrum of a sample of the Pd/m-MoO₃-P₂O₅/SiO₂ exhibits a single resonance centred at δ = -5.5 ppm (Fig. 30), the ³¹P chemical shift matches that of a MoO₃-P₂O₅ glass with Mo:P molar ratio ca. 1. A strong absorption band at ca. 966 cm⁻¹ in the Raman spectrum (Fig. 31) can be assigned to a terminal v(Mo=O) in a MoO₆ octahedra. The data suggest that this glassy structure consists of chains of inter-connected PO₄ tetrahedra and MoO₆ octahedra linked via Mo-O-P bridges.

The coordination environment and chemical states of Mo/Pd atoms in the Pd/m-MoO₃-P₂O₅/SiO₂ catalyst were further investigated by X-ray absorption near-edge structure (XANES) and extended X-ray absorption fine structure (EXAFS) spectroscopies. The Mo K-edge XANES spectrum for Pd/m-MoO₃-P₂O₅/SiO₂ shows a notable shoulder peak (donated as a) in the pre-edge region (Fig. 32a) as MoO₃, suggesting the formation of strongly distorted MoO₆ octahedra having Mo=O bond, in good agreement with the Raman results. The average valence of the Mo ions in the Pd/m-MoO₃-P₂O₅/SiO₂ is estimated to be ca. 5.5 using the linear relation between the Mo oxidation state and the energy position of feature b, indicating the possible existence of mixed-valent Mo^{5/6+} oxide states. The Pd K-edge XANES spectrum is found to exhibit two well-defined features including a shoulder peak c and a doublet peak (d and e) at the white line (Fig. 32d); our XANES simulation reveals that the shoulder peak c can be considered the fingerprint of Pd²⁺ in square planar coordination, while the intensity of feature e is higher for Pd ions in distorted octahedral coordination than for the square planar coordination (Fig. 32g), consistent with XANES results in the literature. Therefore, this implies the incorporation of Pd atoms in the framework of m-MoO₃-P₂O₅/SiO₂ via a combination of square planar and distorted octahedral configurations, with an averaged oxidation state between Pd²⁺ and Pd³⁺. However, except for the peak intensity decrease for the Pd-O nearest-neighbour (NN) coordination shells, it is rather unexpected that the two higher shell peaks at distances of 2.5 and 3.5 Å in the Pd K-edge EXAFS Fourier transform of Pd/m-MoO₃-P₂O₅/SiO₂ display a dramatic intensity increase and a radial shift to lower *R* direction, as compared to its precursor Pd/MoO₃-P₂O₅/SiO₂ (Fig. 32e); similar phenomenon is shown for the Mo K-edge EXAFS results (Fig. 32b).

Meanwhile, complementary wavelet transform (WT) EXAFS analysis reveals strong WT maxima at about 7.0 and 9.5 Å⁻¹, which can be respectively associated with the Pd-P/Si and Pd-Pd/Mo scatterings (Fig. 33), at a distance of around 3.0 Å surrounding Pd atoms in Pd/M-MoO₃-P₂O₅/SiO₂, in marked contrast to the WT maxima distribution in Pd/MoO₃-P₂O₅/SiO₂ (Fig. 32f); slight change is observed for the Mo K-edge WT (Fig. 32c). Those results suggest that more oxygen vacancies are produced by H₂ reduction in the oxide network of Pd/m-MoO₃-P₂O₅/SiO₂, which might cause the collapse of the PdO₆ octahedra by breaking the bridging oxygen atoms with the neighbour polyhedrons. A least-squares curve fitting analysis was carried out for the multiple coordination shells of Mo and Pd. The coordination numbers of the Pd-O bonding in the first NN coordination sphere for Pd/m-MoO₃-P₂O₅/SiO₂ (Pd/MoO₃-P₂O₅/SiO₂) is estimated to be 4.9 (5.6) at a distance of 2.02 (2.03) Å, evidencing the transformation of the Pd-O bonding from a distorted octahedral to a square planer coordination. Simultaneously, the number of Pd/Mo atoms in the second NN coordination sphere of Pd in Pd/m-MoO₃-P₂O₅/SiO₂ is estimated to be 1.5 at a distance of 2.80 Å, much larger than that of 0.4 in Pd/MoO₃-P₂O₅/SiO₂, strongly signalling the presence of Pd-Pd/Mo neighbouring; this tendency is weak for the Mo atoms. To confirm the above XAFS interpretations and exclude the possibility for Pd nanocrystals, DFT calculations were performed; the shortening of the Pd-Mo distance from 3.52 to 2.75 Å is clearly demonstrated since oxygen vacancies are introduced, as schematically shown in Fig. 32h. Thus, XAFS data indicate that Pd is atomically dispersed in the m-MoO₃-P₂O₅/SiO₂ matrix, and the H₂ reduction provides significant oxygen vacancies in a polyhedral-linked network that is characterised by substantial Pd-Pd/Mo pairs.

### Example 3 - Catalyst testing

### General procedure for use of catalytic compound in HDO reaction

In a typical catalytic reaction, a proper amount of catalytic substrate or bio-oil, catalyst and decalin were added to a Parr reactor (reactor volume, 50 mL) and sealed. After finishing purging the reactor with H₂, the reaction was carried out with a proper pressure H₂ (room temperature, 25 °C) at high temperature for a certain time at a stirring speed of 900 rpm. After the reaction was completed and cooled down to room temperature, the organic mixture of the product was collected and analyzed by GC-MS.

### HDO of 2,6-dimethoxyphenol using Pd/reduced-POM/SiO₂ of Example 1a

Using the hydrodeoxygenation of 2,6-dimethoxyphenol as the example, 2,6-dimethoxyphenol (120.5 mg, 0.78 mmol) was added into a stainless steel Parr autoclave (reactor volume, 50 mL) with decalin (10 mL), together with Pd-r-POM/SiO₂ (0.75 wt% Pd (theoretical), 10 wt% Mo, 20.0 mg). After the autoclave was sealed, it was purged with H₂ for three times and then placed under 20 MPa H₂ at room temperature. The reaction was carried out at 250 °C for 1 h with a stirring speed of 900 rpm. After reaction, the organic product was collected and analyzed by GC-MS.

### Catalyst activity and selectivity

The catalytic activity and selectivity of the Pd/reduced-POM/SiO₂ of Example 1c was compared with three other HDO catalysts for its ability to reduce the oxygen content of 2,6-dimethoxyphenol according to the following reaction scheme:

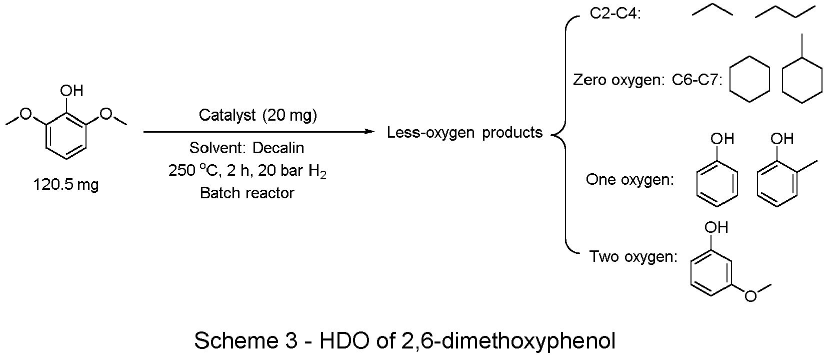

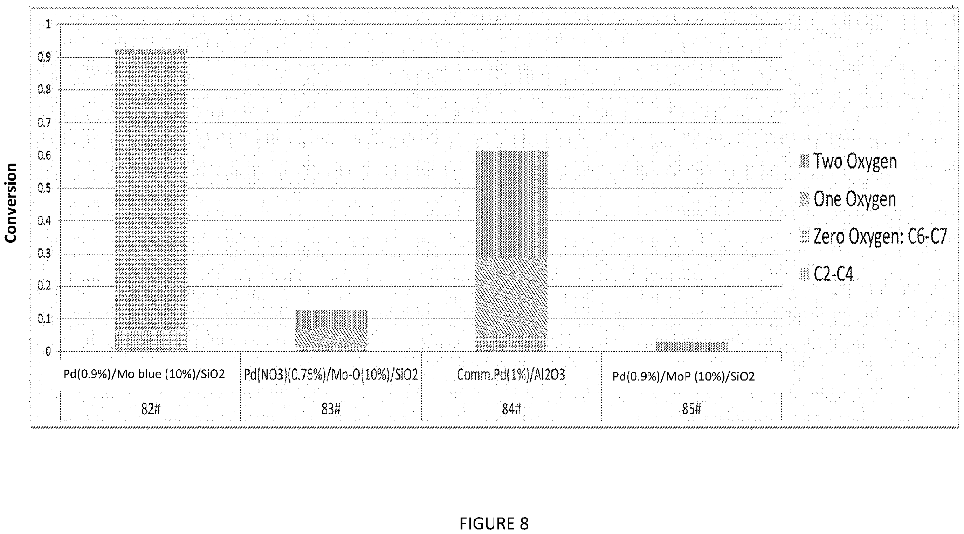

Fig. 8 demonstrates that the Pd/reduced-POM/SiO₂ of Example 1c (82# in Fig. 8) exhibited vastly superior activity than all other HDO. Moreover, the Pd/reduced-POM/SiO₂ of Example 1c is seen to favour the generation of C₆/C₇ zero oxygen-containing compounds, which are highly valued by industry.

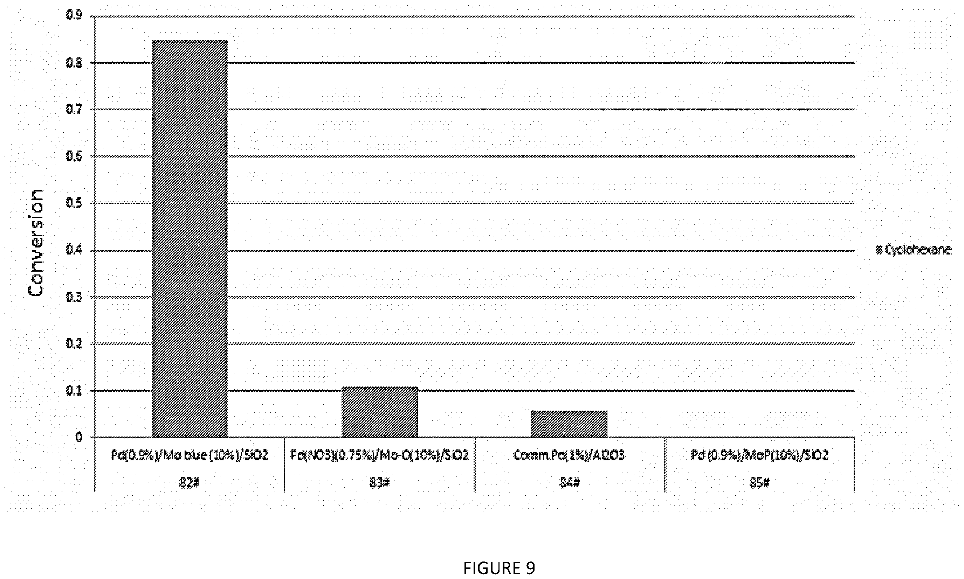

Fig. 9 compares the selectivity of the Pd/reduced-POM/SiO₂ of Example 1c catalytic compound of the invention with three other HDO catalysts for producing cyclohexane as the HDO product of 2,6-dimethoxyphenol. It is seen that the Pd/reduced-POM/SiO₂ of Example 1c exhibits vastly superior selectivity for cyclohexane than all other HDO catalysts. Elsewhere, it was observed that by increasing the theoretical Pd loading of the catalytic compound to 1.1%, the catalytic conversion of the oxygen-containing starting material could be increased to >99%, with the overall cyclohexane yield increasing to >99%.

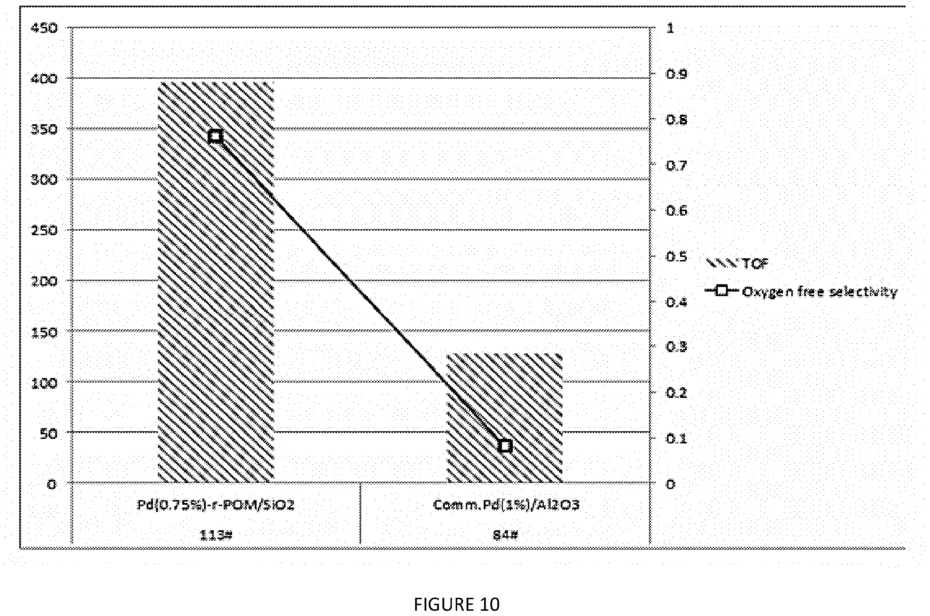

Fig. 10 compares the catalytic activity and selectivity of the HDO of 2,6-dimethoxyphenol using the Pd/reduced-POM/SiO₂ of Example 1a, when compared with a commercial Pd(1%)/Al₂O₃ HDO catalyst.

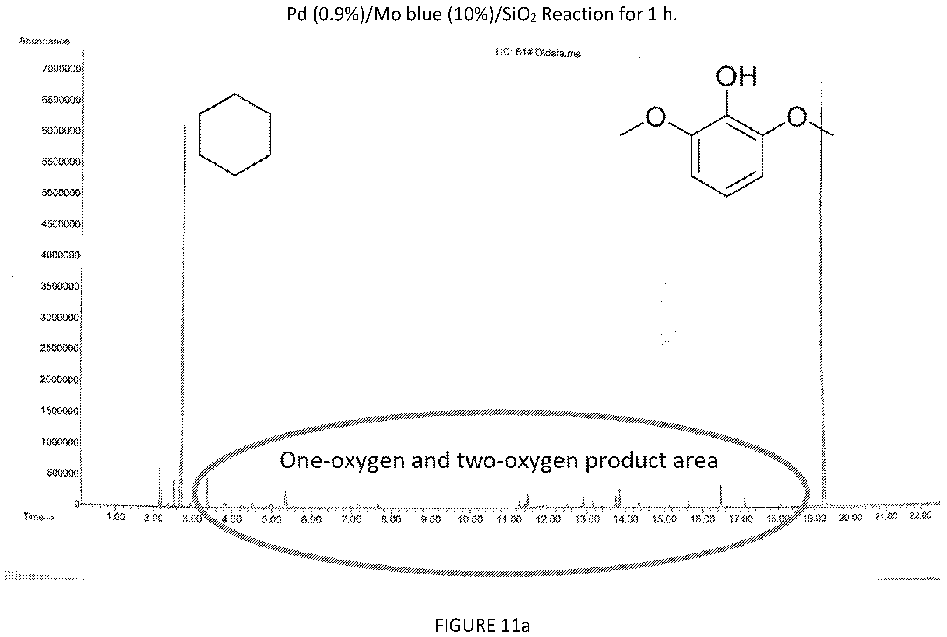

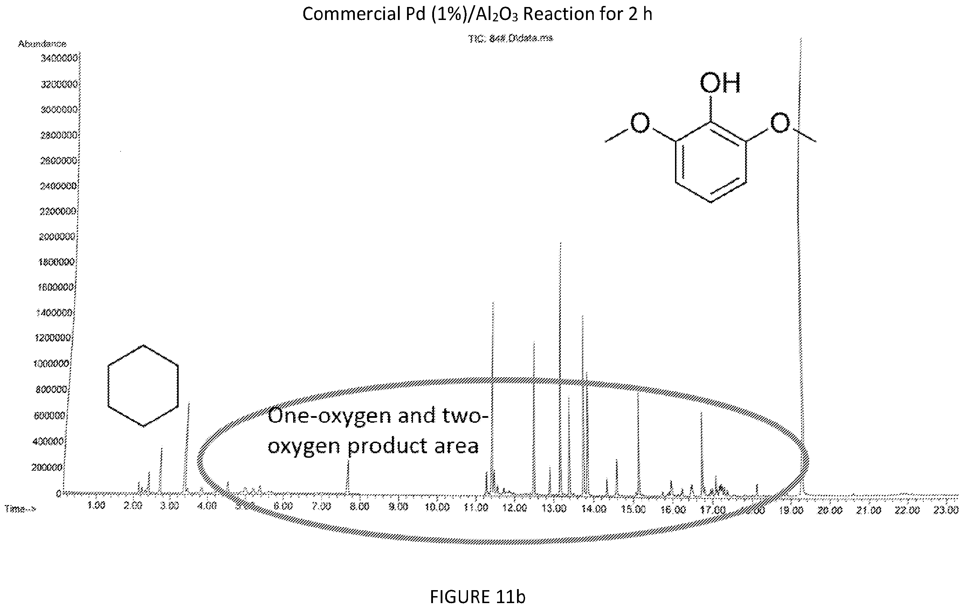

Fig. 11 shows the GC-MS spectra of the product of 2,6-dimethoxyphenol after HDO reaction for a) 1 hours with the Pd/reduced-POM/SiO₂ of Example 1d, and b) 2 hours with a commercial Pd(1%)/Al₂O₃ catalyst. Clearly, the Pd/reduced-POM/SiO₂ of Example 1d yields a product that is markedly more free from oxygen-containing species than does the commercial standard.

### Catalyst stability

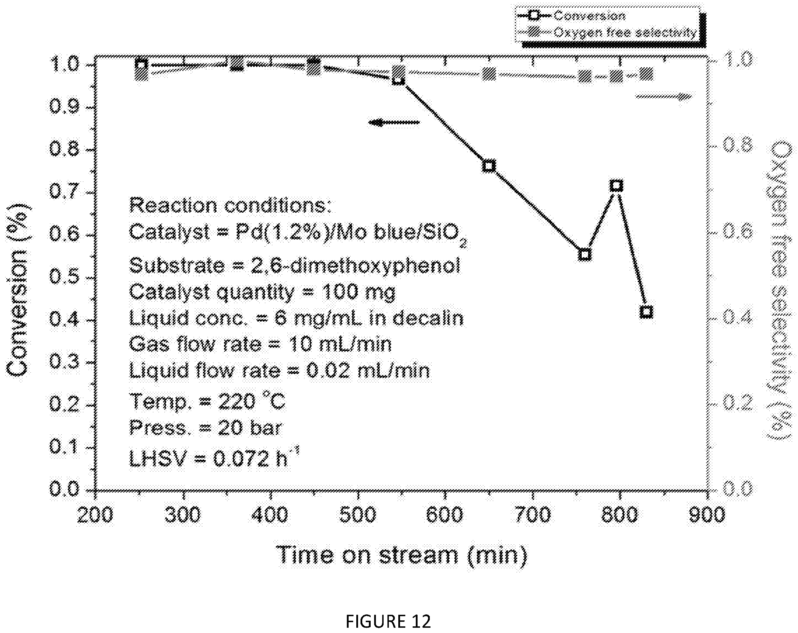

In order to assess the stability of the catalytic compounds of the invention, the Pd/reduced-POM/SiO₂ of Example 1f was used to catalyse the HDO of 2,6-dimethoxyphenol, with the conversion (of 2,6-dimethoxyphenol to reaction products) and selectivity (for oxygen-free reaction products) of the catalyst being determined at various time intervals over the course of the reaction. The results are presented in Fig. 12, which show that the Pd/reduced-POM/SiO₂ of Example 1f exhibits excellent selectivity for oxygen-free reaction products throughout an 800 minute reaction duration, whereas excellent catalytic activity (i.e. conversion of 2,6-dimethoxyphenol to reaction products) is observed over the course of 600 minutes.

### Catalyst optimisation

### Varying Pd content

With a view to optimising the performance of the catalytic compounds of the invention, a series of comparative studies were performed, in which the activity and selectivity of various compound of the invention (having differing theoretical Pd content) was compared with that of various non-claimed comparators. The results are illustrated in Fig. 13. It can be seen that the catalytic compounds of the invention, with varying amounts of Pd, exhibit vastly superior catalytic properties (in terms of combined activity and selectivity for zero oxygen reaction products) than all comparators tested. The results also suggest that the activity and selectivity increases as the loading of Pd within the catalytic compound increases.

### One-step vs. two-step

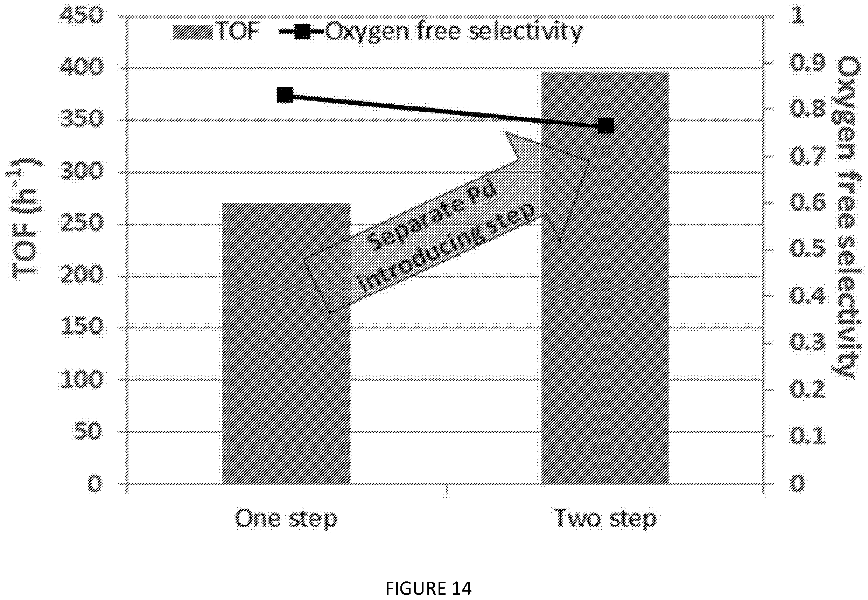

Fig. 14 compares the activity and selectivity of the catalytic compound Pd/reduced-POM/SiO₂ of Example 1a when prepared according to the one-step and two-step techniques. The results suggest that both the one-step and two-step routes give rise to catalysts having remarkable selectivity for oxygen-free compounds, with the two-step route demonstrating better overall activity.

### Reduction time

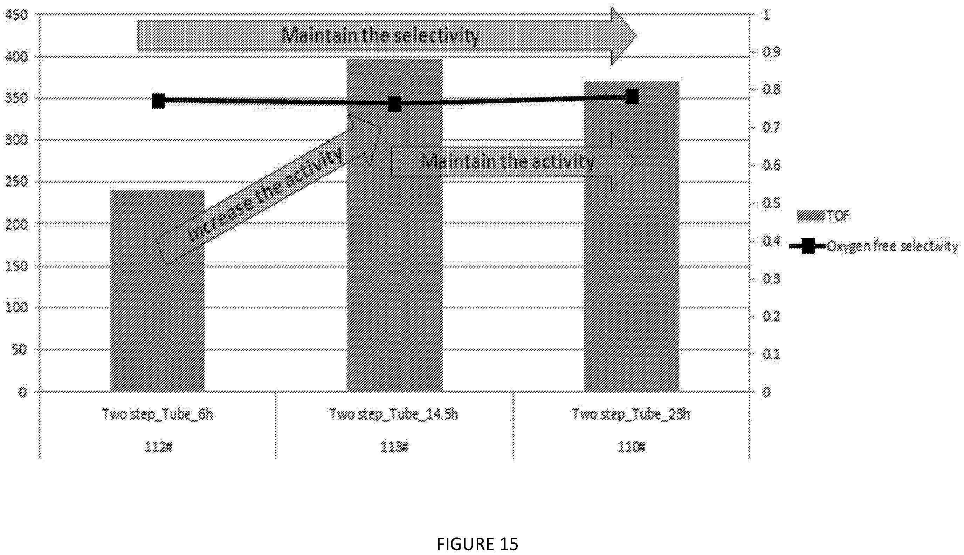

Fig. 15 compares the activity and selectivity of the catalytic compound Pd/reduced-POM/SiO₂ of Example 1a prepared by the two-step route, when reduction step c) is performed for different durations. The results suggest that reducing the catalyst precursor for between 6 and 23 hours gives rise to excellent selectivity for oxygen-free reaction products. It is further noted that reducing the catalyst precursor for 14.5 hours resulted in a catalyst having remarkable overall activity.

### Reduction space

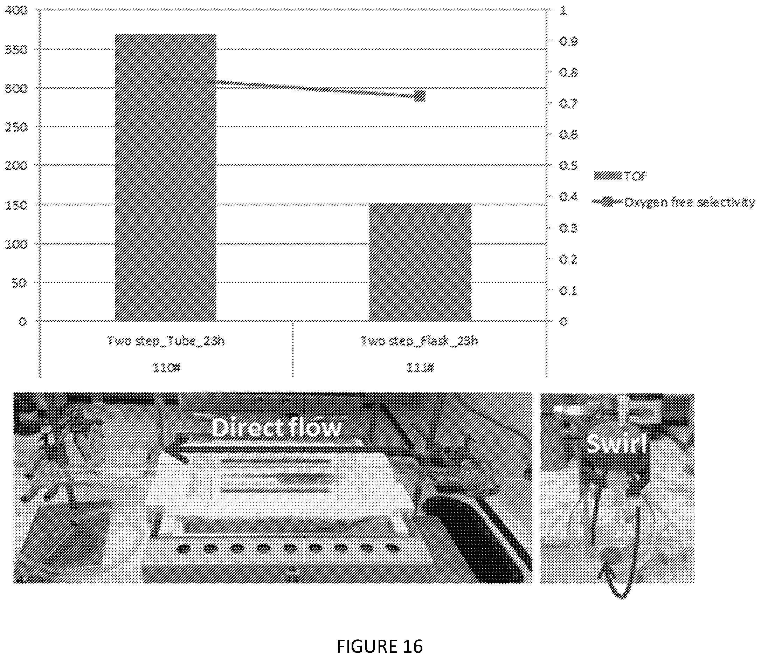

Fig 16 compares the activity and selectivity of the catalytic compound Pd/reduced-POM/SiO₂ of Example 1a prepared by the two-step route, when reduction step c) is performed for 23 hours under i) direct flow of H₂, and ii) swirling H₂ in a flask. The results suggest that reducing the catalyst precursor by both techniques gives rise to excellent selectivity for oxygen-free reaction products. It is further noted that reducing the catalyst under direct flow of H₂ resulted in a catalyst having remarkable overall activity.

### Catalyst composition

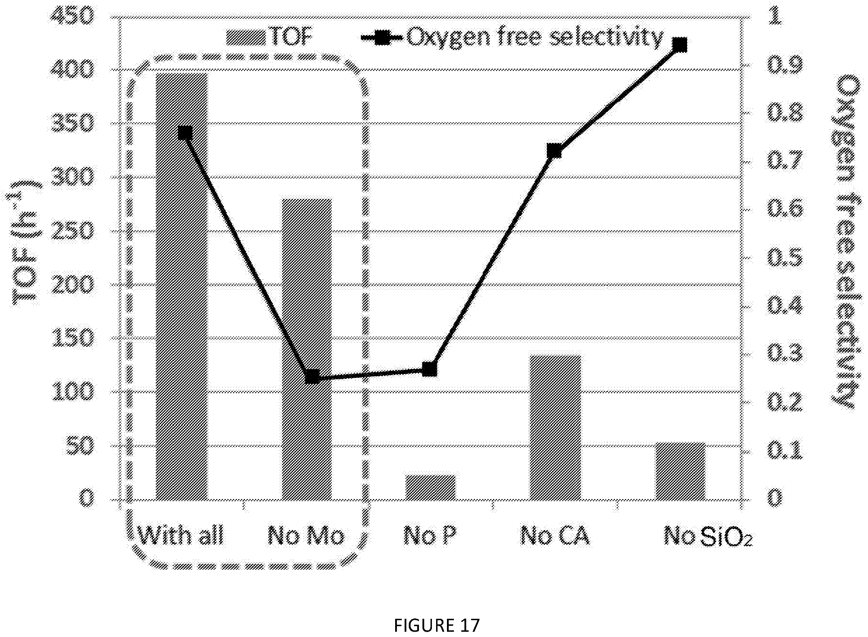

In order to probe the essentiality of each of the components collectively constituting the catalyst, a number of comparator catalysts were prepared in which certain key components were omitted (e.g. Mo, P, citric acid and support). Fig. 17 shows that when compared with the comparator catalysts, the catalytic compound of the invention Pd/reduced-POM/SiO₂ of Example 1a ("with all" of the key components) exhibited vastly superior overall catalytic properties (in terms of activity and selectivity for oxygen-free reaction products).

### Reaction scale

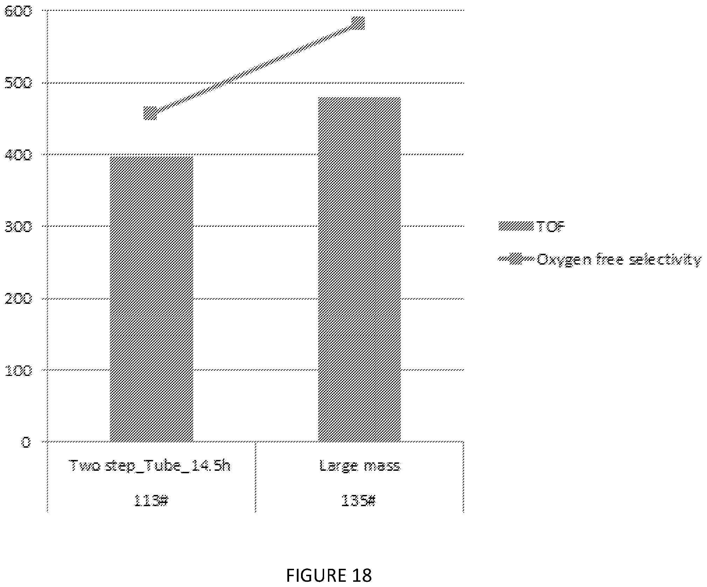

In order to probe the effect of varying the concentration of the substrate and catalyst within the HDO reaction, two separate HDO reactions were conducted using Pd/reduced-POM/SiO₂ of Example 1a one of which reaction contained an increased concentration (by a factor of 1.8) of substrate and catalyst. The results shown in Fig. 18 show that scaling up the reaction resulted in an increase in both the catalyst's activity and selectivity for oxygen-free reaction products.

### Example 4 - Catalyst testing

### Phenol upgrading and stability studies

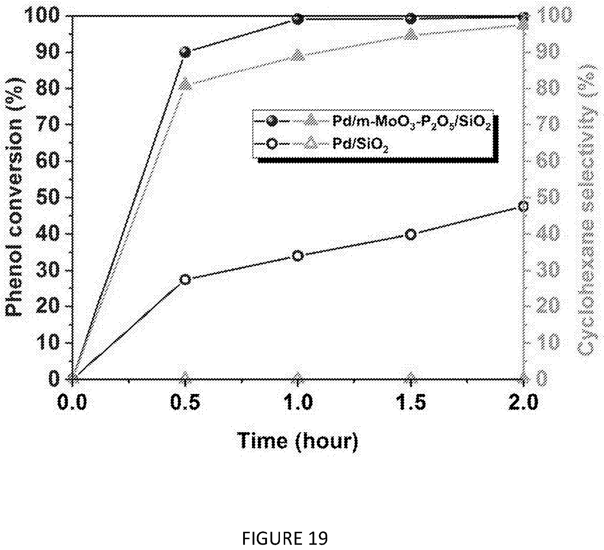

The phenol conversion and cyclohexane selectivity properties of the Pd/reduced-POM/SiO₂ catalyst of Example 1c were compared with those of Pd/SiO₂ in a batch reaction. The results are illustrated in Fig. 19. Fig. 19 demonstrates that the Pd/reduced-POM/SiO₂ catalyst showed a much faster phenol hydrogenation rate compared with Pd/SiO₂, suggesting the superior hydrogenation ability of atomically dispersed Pd.

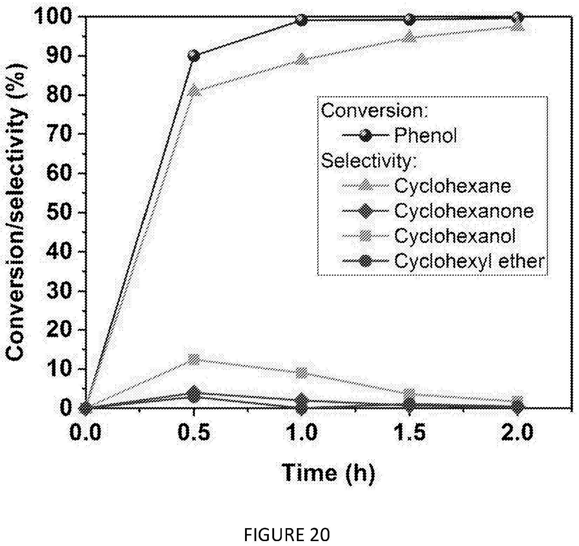

Fig. 20 shows the reaction process by using the Pd/reduced-POM/SiO₂ catalyst of Example 1c involves an increase in cyclohexane selectivity and a decrease in cyclohexanol selectivity, suggesting that phenol is initially hydrogenated to cyclohexanol catalysed by Pd, which is followed by dehydration of cyclohexanol catalysed by reduced-POM and further hydrogenation of cyclohexene to yield cyclohexane catalysed by Pd.

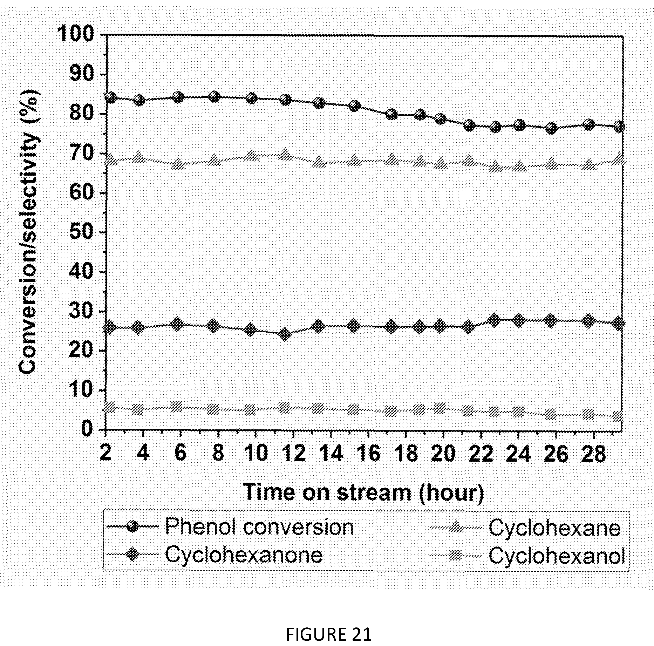

Fig. 21 shows the long-term stability of the Pd/reduced-POM/SiO₂ catalyst of Example 1c in a continuous flow phenol upgrading reaction.

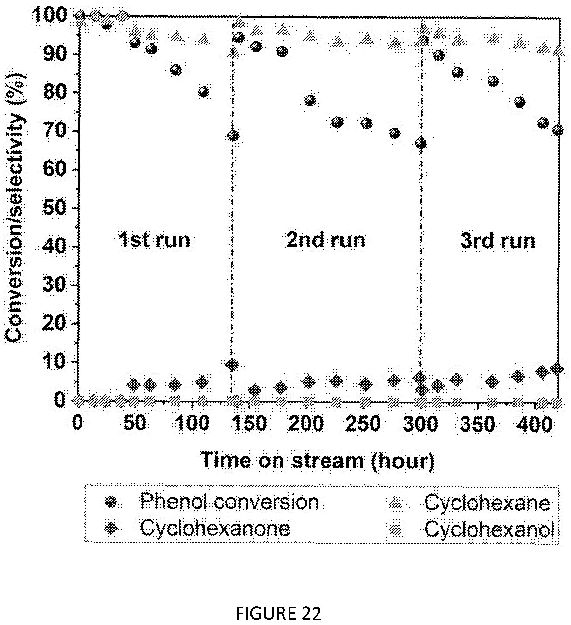

Fig. 22 shows the long-term stability and regenerability of the Pd/reduced-POM/SiO₂ catalyst of Example 1c in a continuous flow phenol upgrading reaction. Fig. 22 demonstrates that the original activity of shows Pd/reduced-POM/SiO₂ of Example 1c could be recovered by calcination at 673 K for 5 h, allowing a long-term reaction over 400 h (3 cycles) with cyclohexane selectivity >90 %, at reaction condition of 453 K, 1 MPa H₂ with flow rate of 10 cm³(STP)min⁻¹, WHSV = 0.09 h⁻¹.

### Gas chromatograph-mass spectrometry analysis of water-insoluble fraction of bio-oil (WIBO) derived from flash pyrolysis of eucalyptus wood and bark before and after upgrading

Hydrodeoxygenation of WIBO was carried out in a batch reactor at 453 K and 1 MPa H₂ for 4 hours, and at 523 K and 1 MPa H₂ for 15 hours, in the presence of the Pd/reduced-POM/SiO₂ catalyst of Example 1c.

GC-MS analysis was carried out on WIBO dissolved in decalin before and after HDO upgrading. The MS detector was off from 6.2 to 9.5 minutes, and 11.8 to 11.9 minutes to block decalin and tetralin signals. The results are shown in Table 2 below:

**Table 2: hydrodeoxygenation products of water-insoluble wood and bark derived WIBO over Pd/reduced-POM/SiO₂ of Example 1c, at 453 K, 1 MPa H₂, 4 hours, and 523 K, 1 MPa H₂, 15 hours, respectively**

| **Products** | **Mass yield^{a}** / **carbon yield^{b} (wt%/wt%)^{a}** | |
|---|---|---|
| | **Entry 1^{c}** | **Entry 2^{d}** |
| Pentane | 0.9/1.5 | 7.4/11.4 |
| Hexane | 1.2/1.8 | 5.1/7.9 |
| Methylcyclopentane | 0.9/1.4 | 3.7/5.8 |
| Cyclohexanes | 5.6/10.2 | 13.4/21.2 |
| Total liquid alkanes | 9.4/14.8 | 29.6/46.3 |
| Others^{e} | 1.2/2.2 | 6.8/10.2 |

| | | |
|---|---|---|
| ^{a}On the basis of the mass of moisture-free WIBO. ^{b}On the basis of the mass of carbon in WIBO. ^{c}Reaction condition: WIBO (86.2 mg), Pd/reduced-POM/SiO₂ (170.83 mg), decalin (7 mL), 453 K, 1 MPa H₂, 4 hours, stirred at 800 rpm. ^{d}Reaction condition: WIBO (87.2 mg), Pd/MoO₃-P₂O₅/SiO₂ (170.8 mg), decalin (7 mL), 523 K, 1 MPa H₂, 4 hours, stirred at 800 rpm. ^{e}Others mainly include C₃-C₄ alkanes. | | |

For Entry 1, total conversion of the oxygenated monomers was achieved after 4 hours, with the production of 9.4 wt% total mass yield of liquid alkanes involving 0.9 wt% pentane, 1.2 wt% hexane and 5.6 wt% C₆-C₉ cycloalkanes (cyclohexane, methylcyclohexane, ethylcyclohexane and propylcyclohexane. Overall a 10.2% carbon yield in the form of cyclohexanes was obtained. This is higher than the maximum carbon yield (5.7%) possible from the lignin-derived monomers present in the WIBO. This indicates that some oligomers in the WIBO were converted into cyclohexanes. The production of pentane and hexane indicates that the hydrodeoxygenation of cellulose and hemicellulose was also achieved. The colour of the mixture became lighter after the reaction, serving as another qualitative indicator of the hydrodeoxygenation efficiency. The GC-MS patterns are shown in Figs. 23-26. Figs. 23-24 show the GC-MS pattern of the WIBO in decalin before upgrading. The overall GC-MS pattern is shown in Fig. 23a, with Fig. 23b and Fig. 24 showing three enlarged regions of the overall pattern. Figs. 25 and 26 show the GC-MS pattern of the WIBO in decalin after upgrading. The overall GC-MS pattern is shown in Fig. 25a, with Fig. 25b and Fig. 26 showing three enlarged regions of the overall pattern.

At 523 K and 1 MPa H₂ (Entry 2), 29.6 wt% total mass yield and 46.3% total carbon yield of liquid alkanes was achieved after 15 hours, the mass yield of cyclohexanes, pentane and hexane reached 13.4, 7.4 and 5.1 wt%, respectively.

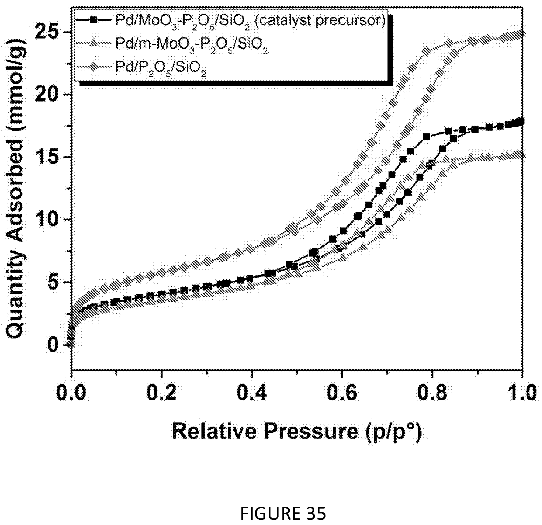

Without wishing to be bound by theory, it is believed that the excellent performance of the catalysts of the invention for hydrodeoxygenation may be attributed to cooperative effects between atomically-dispersed Pd and m-MoO₃-P₂O₅. As shown in Fig. 20, the reaction pathway of phenol hydrodeoxygenation involves catalysed hydrogenations and a dehydration step. The atomically dispersed Pd allows for high hydrogenation activity and enhanced metal atom efficiency compared with Pd/SiO₂ (Fig. 19) by increasing the number of exposed surface atoms, by using very low Pd loading amount of 0.48 wt%. The dehydration step was reported to be catalysed by a Brønsted acid. Accordingly, it would be important to investigate the acidity of Pd/m-MoO₃-P₂O₅/SiO₂. ³¹P MAS NMR labelling technique was performed on the catalyst of Example 1g, giving information about the acid type (Brønsted vs. Lewis), strength and concentration in the materials. The ³¹P MAS NMR spectrum (Fig. 34) of the TMPO-adsorbed on Pd/m-MoO₃-P₂O₅/SiO₂ (Example 1g) exhibits two distinct resonances at 58.0,and 73. ppm, both signals are attributed to the protonation of TMPO by surface Brønsted acid sites (denoted as B-acid I and B-acid II). Quantitative analysis of B-acid concentrations showed that Pd/m-MoO₃-P₂O₅/SiO₂ has exceptionally high Brønsted acid density reaching 0.0138 on the basis of Brunauer-Emmett-Teller (BET) surface area results (Fig. 35). When compared with one of the strongest acidic zeolite, HZSM-5 (Si to Al is 15), Pd/m-MoO₃-P₂O₅/SiO₂ exhibits similar Brønsted acidic strength but 2.6-fold higher Brønsted acidic density (Table 3).

**Table 3. Quantitative analysis of the acidities in different samples.**

| **Sample** | **BET surface area (m²/g)** | **Peak** | | | | | | | | | | | | **B-acid density (mmol/m²)** | **L-acid density (mmol/m²)** |
|---|---|---|---|---|---|---|---|---|---|---|---|---|---|---|---|
| | | **B-acid I** | | | | **B-acid II** | | | | **L-acid III** | | | | | |
| | | ppm | Area(%) | TMPO (mmol/g) | Counts/g (*10²⁰) | ppm | Area (%) | TMPO (mmol/g) | Counts/g (*10²⁰) | ppm | Area (%) | TMPO* (mmol/g) | Counts/g (*10²⁰) | | |
| Pd/MoO₃-P₂O₅/SiO₂ | 331.2 ±0.5 | 59.8 | 59.3% | 1.49 | 8.94 | 75.2 | 40.7% | 1.02 | 6.12 | - | - | - | - | 0.0045 | 0.0031 |
| Pd/m-MoO₃-P₂O₅/SiO₂ | 291.5 ±0.4 | 58.0 | 48.3% | 2.99 | 17.94 | 73.6 | 16.3% | 1.01 | 6.06 | 45.4 | 35.4% | 2.19 | 13.14 | 0.0138 | 0.0075 |
| Pd/P₂O₅/SiO₂ | 471.8 ±0.5 | 50.7 | 100% | 0.333 | 1.998 | - | - | - | - | - | - | - | - | 0.0007 | - |
| ZSM-5 (Si/Al = 15)⁵ | 400 | 63∼7 | 74.1% | 0.500 | 3.000 | 75 | 22.4% | 0.165 | 0.990 | - | - | - | - | 0.0017 | - |

While specific embodiments of the invention have been described herein for the purpose of reference and illustration, various modifications will be apparent to a person skilled in the art without departing from the scope of the invention as defined by the appended claims.

## Claims

1. A process for the preparation of a catalytic compound, the catalytic compound being suitable for reducing the oxygen content of a plant-derived feedstock, the process comprising the steps of:
a) providing a dry mixture by:
a1) mixing:
i. a source of at least one noble metal, wherein the source of at least one noble metal is a source of Pd,
ii. a source of molybdenum and/or tungsten,
iii. a Brønsted acid, wherein the Brønsted acid is selected from HCI, H₂SO₄ and HNO₃,
iv. a carboxylic acid or a polycarboxylic acid, wherein the carboxylic acid or polycarboxylic acid is selected from citric acid, hydroxymethanetricarboxylic acid, (1R,2S)-1-hydroxy-1,2,5-pentanetricarboxylic acid, and 3-(carboxymethyl)-3-hydroxyhexanedioic acid,
v. a source of heteroatom selected from phosphorus, arsenic and silicon, wherein the source of heteroatom selected from phosphorus, arsenic and silicon is selected from (NH₄)₂HPO₄, (NH₄)H₂PO₄ and H₃PO₄, and
vi. water;
a2) contacting the mixture of step a1) with an inorganic support, with mixing, wherein the inorganic support is selected from SiO₂, Al₂O₃, SiO₂-Al₂O₃, ZrO₂, TiO₂ and zeolites; and
a3) drying the mixture resulting from step a2);
or
a'1) mixing:
i. a source of molybdenum and/or tungsten,
ii. a carboxylic acid or a polycarboxylic acid, wherein the carboxylic acid or polycarboxylic acid is selected from citric acid, hydroxymethanetricarboxylic acid, (1*R*,2S)-1-hydroxy-1,2,5-pentanetricarboxylic acid, and 3-(carboxymethyl)-3-hydroxyhexanedioic acid,
iii. a source of heteroatom selected from phosphorus, arsenic and silicon, wherein the source of heteroatom selected from phosphorus, arsenic and silicon is selected from (NH₄)₂HPO₄, (NH₄)H₂PO₄ and H₃PO₄, and
iv. water;
a'2) contacting the mixture of step a'1) with an inorganic support, with mixing, wherein the inorganic support is selected from SiO₂, Al₂O₃, SiO₂-Al₂O₃, ZrO₂, TiO₂ and zeolites;
a'3) drying the mixture resulting from step a'2);
a'4) thermally treating the dried mixture resulting from step a'3) at a temperature of 300-800°C;
a'5) contacting the thermally-treated mixture of step a'4) with an aqueous solution of a Brønsted acid and a source of at least one noble metal, with mixing, wherein the Brønsted acid is selected from HCI, H₂SO₄ and HNO₃ and the source of at least one noble metal is a source of Pd; and
a'6) drying the mixture resulting from step a'5);
b) thermally treating the mixture of step a) at a temperature of 300-800°C to yield a thermally-treated product;
c) contacting the thermally-treated product of step b) with hydrogen;
wherein step c) is conducted at a temperature no higher than 100°C for its duration.

2. The process of claim 1, wherein the mole ratio of the molybdenum and/or tungsten present within the source of molybdenum and/or tungsten to the heteroatom present within the source of heteroatom mixed in step a) is 1: (0.75-1.25).

3. The process of claim 1 or 2, wherein the carboxylic acid or polycarboxylic acid mixed in step a) is present in an excess with respect to the number of moles of molybdenum and/or tungsten present within the source of molybdenum and/or tungsten and the number of moles of heteroatom present within the source of heteroatom;
and the carboxylic acid or polycarboxylic acid is citric acid.

4. The process of claim 1, 2 or 3, wherein the Brønsted acid is HCI.

5. The process of any preceding claim, wherein the source of at least one noble metal is PdCI2.

6. The process of any preceding claim, wherein the source of molybdenum and/or tungsten is (NH₄)₆Mo₇O₂₄.

7. The process of any preceding claim, wherein the source of heteroatom selected from phosphorus, arsenic and silicon is (NH₄)₂HPO₄.

8. The process of any preceding claim, wherein the inorganic support is SiO₂.

9. The process of any preceding claim, wherein step c) is conducted at a temperature of 10-60°C for its duration.

10. The process of any preceding claim, wherein step c) is conducted at a temperature of 10-40°C for 1 - 72 hours.

11. The process of any preceding claim, wherein drying steps a3), a'3) and a'6) are each independently conducted at a temperature of 100-150°C.

12. A catalytic compound obtainable, obtained or directly obtained by the process of any one of claims 1 to 11.

13. Use of the catalytic compound as claimed in claim 12 for reducing the oxygen content of an oxygen-containing compound, wherein the oxygen-containing compound is a mixture of oxygen-containing compounds in the form of a biomass or a bio-oil.

14. A process for reducing the oxygen content of an oxygen containing compound, the process comprising the steps of:
a) providing a mixture of:
i. an oxygen-containing compound,
ii. the catalytic compound of claim 12, and optionally
iii. a suitable solvent; and
b) heating the mixture of step a) to a temperature of 150-350°C,
wherein step b) is performed under H₂.

15. The process of claim 14, wherein the oxygen-containing compound has a structure according to any of the following:

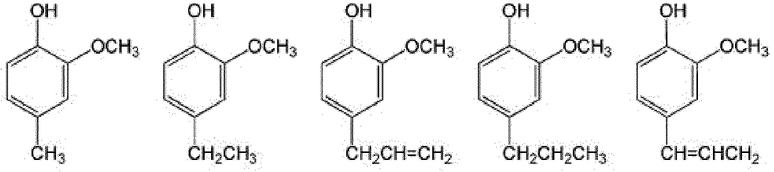

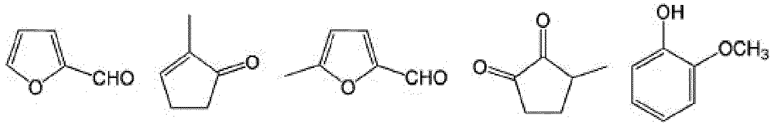

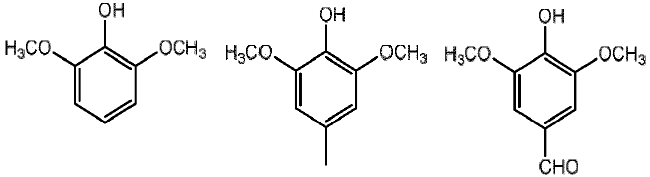

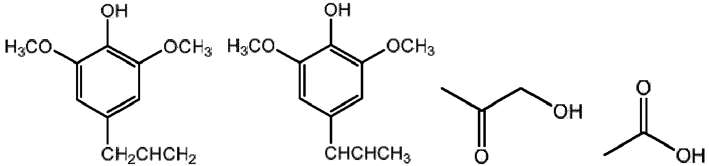

## Patentansprüche

1. Verfahren zur Herstellung einer katalytischen Verbindung, wobei die katalytische Verbindung für das Reduzieren des Sauerstoffgehalts eines pflanzlichen Ausgangsstoffs geeignet ist, wobei das Verfahren die folgenden Schritte umfasst:
a) Bereitstellen eines Trockengemischs durch:
a1) Mischen:
i. einer Quelle mindestens eines Edelmetalls, wobei die Quelle mindestens eines Edelmetalls eine Quelle von Pd ist,
ii. einer Quelle von Molybdän und/oder Wolfram,
iii. einer Brønsted-Säure, wobei die Brønsted-Säure ausgewählt ist aus HCl, H₂SO₄ und HNO₃,
iv. einer Carbonsäure oder einer Polycarbonsäure, wobei die Carbonsäure oder Polycarbonsäure ausgewählt ist aus Zitronensäure, Hydroxymethantricarbonsäure, (1*R*,2*S*)-1-Hydroxy-1,2,5-pentantricarbonsäure und 3-(Carboxymethyl)-3-hydroxyhexandisäure,
v. einer Heteroatom-Quelle, die ausgewählt ist aus Phosphor, Arsen und Silizium, wobei die aus Phosphor, Arsen und Silizium ausgewählte Heteroatom-Quelle ausgewählt ist aus (NH₄)₂HPO₄, (NH₄)H₂PO₄ und H₃PO₄, und
vi. Wasser;
a2) Inkontaktbringen des Gemischs von Schritt a1) mit einem anorganischen Träger, mit Mischen, wobei der anorganische Träger ausgewählt ist aus SiO₂, Al₂O₃, SiO₂-Al₂O₃, ZrO₂, TiO₂ und Zeolithen; und
a3) Trocknen des aus Schritt a2) resultierenden Gemischs;
oder
a'1) Mischen:
i. einer Quelle von Molybdän und/oder Wolfram,
ii. einer Carbonsäure oder einer Polycarbonsäure, wobei die Carbonsäure oder Polycarbonsäure ausgewählt ist aus Zitronensäure, Hydroxymethantricarbonsäure, (1*R*,2*S*)-1-Hydroxy-1,2,5-pentantricarbonsäure und 3-(Carboxymethyl)-3-hydroxyhexandisäure,
iii. einer Heteroatom-Quelle, die ausgewählt ist aus Phosphor, Arsen und Silizium, wobei die aus Phosphor, Arsen und Silizium ausgewählte Heteroatom-Quelle ausgewählt ist aus (NH₄)₂HPO₄, (NH₄)H₂PO₄ und H₃PO₄, und
iv. Wasser;
a'2) Inkontaktbringen des Gemischs von Schritt a'1) mit einem anorganischen Träger, mit Mischen, wobei der anorganische Träger ausgewählt ist aus SiO₂, Al₂O₃, SiO₂-Al₂O₃, ZrO₂, TiO₂ und Zeolithen;
a'3) Trocknen des aus Schritt a'2) resultierenden Gemischs;
a'4) Wärmebehandeln des aus Schritt a'3) resultierenden getrockneten Gemischs bei einer Temperatur von 300-800 °C;
a'5) Inkontaktbringen des wärmebehandelten Gemischs von Schritt a'4) mit einer wässrigen Lösung aus einer Brønsted-Säure und einer Quelle mindestens eines Edelmetalls, mit Mischen, wobei die Brønsted-Säure ausgewählt ist aus HCl, H₂SO₄ und HNO₃ und die Quelle mindestens eines Edelmetalls eine Quelle von Pd ist; und
a'6) Trocknen des aus Schritt a'5) resultierenden Gemischs;
b) Wärmebehandeln des Gemischs von Schritt a) bei einer Temperatur von 300-800 °C, um ein wärmebehandeltes Produkt zu ergeben;
c) Inkontaktbringen des wärmebehandelten Produkts von Schritt b) mit Wasserstoff; wobei Schritt c) bei einer Temperatur von nicht höher als 100 °C für seine Dauer durchgeführt wird.

2. Verfahren nach Anspruch 1, wobei das Molverhältnis des innerhalb der Quelle von Molybdän und/oder Wolfram vorliegenden Molybdäns und/oder Wolframs zu dem innerhalb der in Schritt a) gemischten Heteroatome-Quelle vorliegenden Heteroatom 1: (0,75-1,25) beträgt.

3. Verfahren nach Anspruch 1 oder 2, wobei die in Schritt a) gemischte Carbonsäure oder Polycarbonsäure in einem Überschuss mit Bezug auf die innerhalb der Quelle von Molybdän und/oder Wolfram vorliegende Molzahl von Molybdän und/oder Wolfram und die innerhalb der Heteroatom-Quelle vorliegende Heteroatom-Molzahl vorliegt; und die Carbonsäure oder Polycarbonsäure Zitronensäure ist.

4. Verfahren nach Anspruch 1, 2 oder 3, wobei die Brønsted-Säure HCl ist.

5. Verfahren nach einem vorhergehenden Anspruch, wobei die Quelle mindestens eines Edelmetalls PdCl₂ ist.

6. Verfahren nach einem vorhergehenden Anspruch, wobei die Quelle von Molybdän und/oder Wolfram (NH₄)₆Mο₇O₂₄ ist.

7. Verfahren nach einem vorhergehenden Anspruch, wobei die aus Phosphor, Arsen und Silizium ausgewählte Heteroatom-Quelle (NH₄)₂HPO₄ ist.

8. Verfahren nach einem vorhergehenden Anspruch, wobei der anorganische Träger SiO₂ ist.

9. Verfahren nach einem vorhergehenden Anspruch, wobei Schritt c) bei einer Temperatur von 10-60 °C für seine Dauer durchgeführt wird.

10. Verfahren nach einem vorhergehenden Anspruch, wobei Schritt c) bei einer Temperatur von 10-40 °C für 1-72 Stunden durchgeführt wird.

11. Verfahren nach einem vorhergehenden Anspruch, wobei Trocknungsschritte a3), a'3) und a'6) jeweils unabhängig bei einer Temperatur von 100-150 °C durchgeführt werden.

12. Katalytische Verbindung, die durch das Verfahren nach einem der Ansprüche 1 bis 11 erhältlich ist, erhalten oder direkt erhalten wird.

13. Verwendung der katalytischen Verbindung nach Anspruch 12 zum Reduzieren des Sauerstoffgehalts einer sauerstoffhaltigen Verbindung, wobei die sauerstoffhaltige Verbindung ein Gemisch aus sauerstoffhaltigen Verbindungen in Form einer Biomasse oder eines Bio-Öls ist.

14. Verfahren zum Reduzieren des Sauerstoffgehalts einer sauerstoffhaltigen Verbindung, wobei das Verfahren die folgenden Schritte umfasst:
a) Bereitstellen eines Gemischs aus:
i. einer sauerstoffhaltigen Verbindung,
ii. der katalytischen Verbindung nach Anspruch 12, und wahlweise
iii. einem geeigneten Lösungsmittel; und
b) Erhitzen des Gemischs von Schritt a) auf eine Temperatur von 150-350 °C, wobei Schritt b) unter H₂ durchgeführt wird.

15. Verfahren nach Anspruch 14, wobei die sauerstoffhaltige Verbindung eine Struktur gemäß beliebigen der folgenden aufweist:

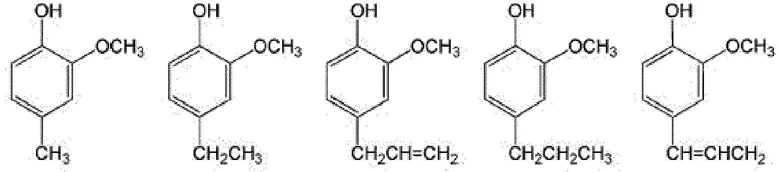

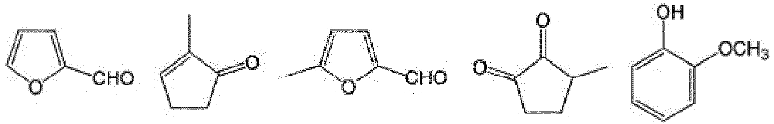

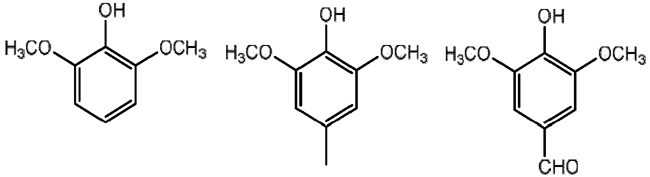

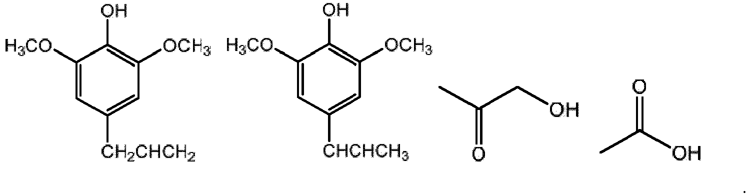

## Revendications

1. Procédé destiné à la préparation d'un composé catalytique, le composé catalytique étant adapté à la réduction de la teneur en oxygène d'une charge d'alimentation d'origine végétale, le procédé comprenant les étapes de :
a) fourniture d'un mélange sec par :
a1) mélange :
i. d'une source d'au moins un métal noble, dans lequel la source d'au moins un métal noble est une source de Pd,
ii. d'une source de molybdène et/ou de tungstène,
iii. d'un acide de Brönsted, dans lequel l'acide de Brönsted est choisi parmi HCl, H₂SO₄ et HNO₃,
iv. d'un acide carboxylique ou d'un acide polycarboxylique, dans lequel l'acide carboxylique ou l'acide polycarboxylique est choisi parmi l'acide citrique, l'acide hydroxyméthanetricarboxylique, l'acide (1*R*,2*S*)-1-hydroxy -1,2,5 -pentanetri carboxylique, et l'acide 3-(carboxyméthyl)-3-hydroxyhexanedioïque,
v. d'une source d'hétéroatome choisie parmi le phosphore, l'arsenic et le silicium, dans lequel la source d'hétéroatome choisie parmi le phosphore, l'arsenic et le silicium est choisie parmi (NH₄)₂HPO₄, (NH₄)H₂PO₄ et H₃PO₄, et
vi. d'eau ;
a2) mise en contact du mélange de l'étape a1) avec un support inorganique, avec mélange, dans lequel le support inorganique est choisi parmi SiO₂, Al₂O₃, SiO₂-Al₂O₃, ZrO₂,TiO₂ et des zéolites ; et
a3) séchage du mélange résultant de l'étape a2) ; ou
a'1) mélange:
i. d'une source de molybdène et/ou de tungstène,
ii. d'un acide carboxylique ou d'un acide polycarboxylique, dans lequel l'acide carboxylique ou l'acide polycarboxylique est choisi parmi l'acide citrique, l'acide hydroxyméthanetricarboxylique, l'acide (1*R*,2*S*)-1-hydroxy-1,2,5-pentanetricarboxylique, et l'acide 3-(carboxyméthyl)-3-hydroxyhexanedioïque,
iii. d'une source d'hétéroatome choisie parmi le phosphore, l'arsenic et le silicium, dans lequel la source d'hétéroatome choisie parmi le phosphore, l'arsenic et le silicium est choisie parmi (NH₄)₂HPO₄, (NH₄)H₂PO₄ et H₃PO₄, et
iv. d'eau ;
a'2) mise en contact du mélange de l'étape a'1) avec un support inorganique, avec mélange, dans lequel le support inorganique est choisi parmi SiO₂, Al₂O₃, SiO₂-Al₂O₃, ZrO₂,TiO₂ et des zéolites ;
a'3) séchage du mélange résultant de l'étape a'2) ;
a'4) traitement thermique du mélange séché résultant de l'étape a'3) à une température allant de 300 à 800 °C ;
a'5) mise en contact du mélange traité thermiquement de l'étape a'4) avec une solution aqueuse d'un acide de Brönsted et d'une source d'au moins un métal noble, avec mélange, dans lequel l'acide de Brönsted est choisi parmi HCl, H₂SO₄ et HNO₃ et la source d'au moins un métal noble est une source de Pd ; et
a'6) séchage du mélange résultant de l'étape a'5) ;
b) traitement thermique du mélange de l'étape a) à une température de 300 à 800 °C pour produire un produit traité thermiquement ;
c) mise en contact du produit traité thermiquement de l'étape b) avec de l'hydrogène ; dans lequel l'étape c) est menée à une température inférieure ou égale à 100 °C sur toute sa durée.

2. Procédé selon la revendication 1, dans lequel le rapport molaire du molybdène et/ou du tungstène présents au sein de la source de molybdène et/ou de tungstène à l'hétéroatome présent au sein de la source d'hétéroatome mélangés dans l'étape a) est 1/(0,75 à 1,25).

3. Procédé selon la revendication 1 ou 2, dans lequel l'acide carboxylique ou l'acide polycarboxylique mélangé dans l'étape a) est présent en excès par rapport au nombre de moles de molybdène et/ou de tungstène présentes au sein de la source de molybdène et/ou de tungstène et au nombre de moles d'hétéroatome présentes au sein de la source d'hétéroatome ;
et l'acide carboxylique ou l'acide polycarboxylique est l'acide citrique.

4. Procédé selon la revendication 1, 2 ou 3, dans lequel l'acide de Brönsted est HCl.

5. Procédé selon l'une quelconque des revendications précédentes, dans lequel la source d'au moins un métal noble est PdCl₂.

6. Procédé selon l'une quelconque des revendications précédentes, dans lequel la source de molybdène et/ou de tungstène est (NH₄)₆Mο₇O₂₄.

7. Procédé selon l'une quelconque des revendications précédentes, dans lequel la source d'hétéroatome choisie parmi le phosphore, l'arsenic et le silicium est (NH₄)₂HPO₄.

8. Procédé selon l'une quelconque des revendications précédentes, dans lequel le support inorganique est SiO₂.

9. Procédé selon l'une quelconque des revendications précédentes, dans lequel l'étape c) est menée à une température allant de 10 à 60 °C sur toute sa durée.

10. Procédé selon l'une quelconque des revendications précédentes, dans lequel l'étape c) est menée à une température allant de 10 à 40 °C pendant 1 à 72 heures.

11. Procédé selon l'une quelconque des revendications précédentes, dans lequel les étapes de séchage a3), a'3) et a'6) sont chacune menées indépendamment à une température allant de 100 à 150 °C.

12. Composé catalytique capable d'être obtenu, obtenu ou obtenu directement par le procédé selon l'une quelconque des revendications 1 à 11.

13. Utilisation du composé catalytique selon la revendication 12 destinée à réduire la teneur en oxygène d'un composé contenant de l'oxygène, dans lequel le composé contenant de l'oxygène est un mélange de composés contenant de l'oxygène sous la forme d'une biomasse ou d'une huile biologique.

14. Procédé destiné à réduire la teneur en oxygène d'un composé contenant de l'oxygène, le procédé comprenant les étapes de :
a) fourniture d'un mélange :
i. d'un composé contenant de l'oxygène,
ii. du composé catalytique selon la revendication 12, et facultativement
iii. d'un solvant adapté ; et
b) chauffage du mélange de l'étape a) à une température allant de 150 à 350 °C, dans lequel l'étape b) est réalisée sous H₂.

15. Procédé selon la revendication 14, dans lequel le composé contenant de l'oxygène a une structure selon l'une quelconque des suivantes :
